(19) Europäisches Patentamt
European Patent Office
Office européen des brevets

(11) **EP 3 727 908 B1**

(12) **EUROPÄISCHE PATENTSCHRIFT**

(45) Veröffentlichungstag und Bekanntmachung des Hinweises auf die Patenterteilung:
**20.10.2021 Patentblatt 2021/42**

(21) Anmeldenummer: **18782677.1**

(22) Anmeldetag: **26.09.2018**

(51) Int Cl.:
**B60G 17/018** (2006.01)   **B60G 17/052** (2006.01)
**B60G 17/056** (2006.01)

(86) Internationale Anmeldenummer:
**PCT/EP2018/076117**

(87) Internationale Veröffentlichungsnummer:
**WO 2019/120657 (27.06.2019 Gazette 2019/26)**

(54) **VERFAHREN ZUM BETREIBEN EINES PNEUMATISCHEN SYSTEMS MIT EINER DRUCKLUFTVERSORGUNGSANLAGE UND EINER LUFTFEDERANLAGE UND PNEUMATISCHES SYSTEM MIT EINER DRUCKLUFTVERSORGUNGSANLAGE UND EINER LUFTFEDERANLAGE SOWIE FAHRZEUG**

METHOD FOR OPERATING A PNEUMATIC SYSTEM WITH A COMPRESSED AIR SUPPLY UNIT AND AN AIR SPRING UNIT, PNEUMATIC SYSTEM COMPRISING A COMPRESSED AIR SUPPLY UNIT AND AN AIR SPRING UNIT, AND VEHICLE

PROCÉDÉ POUR LE FONCTIONNEMENT D'UN SYSTÈME PNEUMATIQUE POURVU D'UNE INSTALLATION D'ALIMENTATION EN AIR COMPRIMÉ ET D'UNE INSTALLATION D'AMORTISSEUR PNEUMATIQUE ET SYSTÈME PNEUMATIQUE POURVU D'UNE INSTALLATION D'ALIMENTATION EN AIR COMPRIMÉ ET D'UNE INSTALLATION D'AMORTISSEUR PNEUMATIQUE AINSI QUE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2017 DE 102017011905**

(43) Veröffentlichungstag der Anmeldung:
**28.10.2020 Patentblatt 2020/44**

(73) Patentinhaber: **ZF CV Systems Hannover GmbH 30453 Hannover (DE)**

(72) Erfinder:
• **SCHARPENBERG, Jörg 30938 Burgwedel (DE)**
• **HAHN, Matthias Barsinghausen 30890 (DE)**
• **YILMAZ, Fatih Ömer 30165 Hannover (DE)**

(74) Vertreter: **Rabe, Dirk-Heinrich ZF CV Systems Hannover GmbH Am Lindener Hafen 21 30453 Hannover (DE)**

(56) Entgegenhaltungen:
**EP-A1- 1 844 961        EP-A1- 2 301 775
EP-B1- 1 744 915        WO-A1-2009/054797
DE-A1-102005 045 269        JP-B2- 3 039 209**

**Beschreibung**

Verfahren zum Betreiben eines pneumatischen Systems mit einer Druckluftversorgungsanlage und einer Luftfederanlage und pneumatisches System mit einer Druckluftversorgungsanlage und einer Luftfederanlage sowie Fahrzeug.

Die Erfindung betrifft ein Verfahren zum Betreiben eines pneumatischen Systems nach Anspruch 1. Die Erfindung betrifft auch ein pneumatisches System mit einer Druckluftversorgungsanlage und einer Luftfederanlage und ein Fahrzeug.

Verfahren zum Betreiben eines pneumatischen Systems, insbesondere zur messenden Bestimmung eines Druckes in einem pneumatischen System, sind allgemein bekannt. Insbesondere bei einem pneumatischen System mit einer Druckluftversorgungsanlage und einer Luftfederanlage ist es zur Druckbestimmung inzwischen wünschenswert, die Abhängigkeit von Messungen durch Drucksensoren zu verringern, insbesondere um den apparativen Aufwand zu reduzieren und die Messzeiten, in denen die Funktionalität der Anlage nicht zur Verfügung steht, zu minimieren.

Ein eingangs genanntes Verfahren ist bekannt aus EP 1 744 915 B1. Konkret wird das Verfahren angewendet, wenn der Druck im Luftspeicher größer als der Druck in den Luftfedern ist und die Durchströmung im Drosselrückschlagventil und im Lufttrockner im unterkritischen Bereich liegt. Zunächst wird dann innerhalb der Luftversorgungsanlage ein abgeschlossener Kontrollraum ausgewählt, wozu sich am besten das Kurbelgehäuse des Kompressors und der Lufttrockner eignet. Dieser Kontrollraum wird auf ein definiertes Druckniveau gebracht.

So ist es zweckmäßig, diesen Kontrollraum mit Hilfe des 2/2-Wegeventils mit der Atmosphäre zu verbinden, sodass sich im Kontrollraum der atmosphärische Druck einstellt. Damit ist der Druck im Kontrollraum bekannt. Anschließend wird das 2/2-Wegeventil für eine definierte Zeit geöffnet, sodass bis zum Druckausgleich eine Druckluftmenge von den druckhöheren Luftfedern in den druckminderen Kontrollraum strömt. Dabei wird der zurückgelegte Weg der Luftfedern gemessen. Aus diesem Weg wird auf den Beladungszustand des Fahrzeuges geschlossen. Mit diesem Beladungszustand und der zuvor ermittelten Einsenkung der Luftfedern wird über eine Simulation auf den Druck in den Luftfedern geschlossen. Danach wird der mittlere Volumenstrom über dem Drosselrückschlagventil und dem Lufttrockner ermittelt, wobei angenommen wird, dass der Druck im Luftspeicher höher ist als der Druck. Dazu werden die 2/2-Wegeventile und für eine definierte Zeit geöffnet, sodass eine Druckluftmenge vom Luftspeicher über den Lufttrockner in die Luftfedern strömt. Dabei wird der von den Luftfedern zurückgelegte Weg gemessen und daraus die Volumenänderung Verrechnet. Damit ist auch der Volumenstrom vom Luftspeicher zu den Luftfedern bekannt. Mit dem ermittelten Druck in den Luftfedern und dem mittleren Volumenstrom sowie mit der leicht zu ermittelnden Außentemperatur sind alle variablen Größen bekannt, um den Druck im Luftspeicher zu berechnen, wobei in die Berechnung die anlagenspezifischen Konstanten sowie eine normative Temperatur und ein normativer Druck einbezogen werden.

Mit dem so ermittelten Druck im Luftspeicher und dem bekannten Volumen im Luftspeicher sowie mit dem ermittelten Druck in den Luftfedern und mit dem über den zurückgelegten Weg der Luftfedern errechneten Volumen der Luftfedern wird die Druckluftmenge der Luftversorgungsanlage errechnet und mit dem Druckluftmengentoleranzband verglichen. Bei einer Überschreitung der minimal zulässigen Druckluftmenge wird eine entsprechende Druckluftmenge in die Luftversorgungsanlage aufgefüllt, während bei einer Überschreitung der maximalen zulässigen Druckluftmenge eine entsprechende Druckluftmenge aus der Luftversorgungsanlage abgelassen wird. Damit enthält die Luftversorgungsanlage wieder eine innerhalb des Druckluftmengenbandes für den Auslegungsfall liegende Druckluftmenge.

Insofern wird ein Verfahren zur Luftmengenregelung in einer geschlossenen Luftversorgungsanlage für ein Fahrwerk beschrieben, bei dem der Bedarf oder der Überschuss an einer erforderlichen Druckluftmenge der Luftversorgungsanlage für einen Auslegungsfall ermittelt und über eine definierte Zeit der Luftversorgungsanlage aufgefüllt oder abgelassen wird.

Zwar leistet ein Ansatz wie im Stand der Technik gemäß EP 1 744 915 B1 eine Verringerung des Aufwandes, indem das dort beschriebene Verfahren sogar vollständig ohne einen Drucksensor auskommt. Es zeigen sich jedoch einige Unzulänglichkeiten. Das Konzept ist vor allem noch verbesserungswürdig hinsichtlich der Zuverlässigkeit eines ggfs. nur näherungsweise berechneten Druckwerts. Auch sind die zur Berechnung des Druckes notwendigen Absenk- und Hebevorgänge des Fahrzeugs wenig effizient, da in dieser Zeit die Funktionalität der Niveauregelung nicht zur Verfügung steht und da die Messvorgänge zu einem Druckverlust führen. Auch haben die Absenk- und Hebevorgänge eine Änderung des Fahrzeugniveaus zur Folge.

Die EP2301775A1, die den Oberbegriff der Ansprüche 1 und 17 offenbart, betrifft ein Verfahren zur Bestimmung der Luftmasse in einem elektronisch regelbaren Luftfedersystem für Kraftfahrzeuge mit einem Vorratsbehälter, wobei jedem Fahrzeugrad jeweils eine Luftfederdämpfereinheit zugeordnet ist, sowie eine Vorrichtung zur Durchführung des Verfahrens. Um jederzeit die sich im Luftfedersystem befindliche Luftmasse ermitteln zu können ist vorgesehen, dass der sich im Luftfedersystem befindliche Luftdruck ermittelt wird und anschließend die sich im Luftfedersystem befindliche Luftmasse berechnet wird. Zu diesem Zweck wird das Volumen des Luftfedersystems durch eine vorab durchgeführte Messung oder Berechnung der Volumina des Vorratsbehälters und der Luftfederdämpfereinheiten bestimmt.

Die EP1844961A1 betrifft ein Verfahren zur Niveauregulierung eines Fahrzeugaufbaus mit Hilfe einer Luftfederungseinrichtung durch Be- oder Entlüften von Luftbälgen. Es ist vorgesehen, dass die in wenigstens einigen der Luftbälge vorhandene Ist-Luftmasse oder Ist-Luftmenge bestimmt und als Regelgröße in Abhängigkeit von einem vorgegebenen Soll-Niveau des Aufbaus auf eine Soll-Luftmasse oder Soll-Luftmenge eingeregelt wird.

Die WO2009054797A1 betrifft ein Verfahren zum Schätzen einer Druckluftmenge, die einem Luftbalg zugeführt wird, der Teil eines Luftversorgungssystems eines Fahrzeugs ist. Die Größe einer dem Luftbalg zugeführten Druckluftmenge wird mittels eines Rechenmodells auf der Grundlage des gemessenen Wertes berechnet, der die Balghöhe des Luftbalgs darstellt, und des gemessenen Wertes, der den Balgdruck der Luft darstellt Balg.

Wünschenswert ist es, ein Verfahren, eine Einrichtung zum Steuern und Regeln eines pneumatischen Systems und ein pneumatisches System mit einer Druckluftversorgungsanlage und einer Luftfederanlage anzugeben, das hinsichtlich der Zuverlässigkeit der Druckbestimmung und der Effizienz, insbesondere der Anlagenverfügbarkeit, zu verbessern.

An dieser Stelle setzt die Erfindung an, deren Aufgabe es ist, in obiger Hinsicht verbessertes Verfahren und pneumatisches System mit einer Druckluftversorgungsanlage und einer Luftfederanlage anzugeben, wobei der Druck in dem pneumatischen System zuverlässig und effizient bestimmt wird. Insbesondere soll die Abhängigkeit von sensorbasierten Messungen verringert werden.

Die Aufgabe, betreffend das Verfahren, wird durch die Erfindung mit einem Verfahren des Anspruchs 1 gelöst.

Die JP3039209B2 betrifft die Bereitstellung einer Luftfederungssteuervorrichtung, die die Lage einer Karosserie steuert, indem das Ansaugen und Ablassen von Arbeitsgas gesteuert wird, das der Luftkammer der Luftfeder zugeführt wird, die jedem Rad bereitgestellt wird. Die Zielmasse des tatsächlichen Gases in jeder Luftkammer wird von einem Zielmassen-Betriebsmittel betrieben, das auf einem Betriebszustand basiert, der von einem Laufzustandserfassungsmittel erfasst wird, und gleichzeitig wird die Masse des tatsächlichen Gases in jeder Kammer von einem tatsächlichen betrieben Gasmassenbetriebsmittel erfasst.

Die DE102005045269A1 offenbart ein Verfahren zur Erkennung von Leckagen in einer Kraftfahrzeug-Luftfederanordnung mit einer Niveauregeleinrichtung, die mehrere Luftfedern, Einrichtungen zum Ermitteln der Gesamtluftmenge in der Luftfederanordnung und Einrichtungen Temperaturerfassen aufweist, sowie eine Vorrichtung zur Durchführung des Verfahrens offenbart. Es ist bei dem Verfahren vorgesehen, dass zu einem ersten Zeitpunkt die Gesamtluftmenge und zu einem zweiten Zeitpunkt die Gesamtluftmenge in der Luftfederanordnung ermittelt werden, die um einen temperaturabhängigen Faktor korrigiert werden, der sich aus dem Erfassen der Temperatur der in der Luftfederanordnung befindlichen Luft ergibt, und die Differenz der temperaturkorrigierten ersten und zweiten Gesamtluftmenge gebildet wird, so dass bei Überschreiten der Differenz um einen bestimmten Grenzwert auf eine Leckage in der Luftfederanordnung erkannt wird.

Die Erfindung geht von der Überlegung aus, dass es generell vorteilhaft ist, die Anzahl der Sensoren zur Druckbestimmung zu reduzieren, insbesondere um Kosten zu sparen und den apparativen Aufwand zu verringern.

Die Erfindung geht weiter von der Überlegung aus, dass andererseits eine Reduzierung der Anzahl von Drucksensoren, insbesondere auf einen Drucksensor, dazu führen kann, dass verschiedene Druckmessungen nacheinander, durch das sequenzielle Aufschalten der zu messenden Komponenten erfolgen dürften, und dies mit Nachteilen verbunden sein kann.

Die Erfindung geht aus von einem Verfahren zum Betreiben eines pneumatischen Systems mit einer Druckluftversorgungsanlage und einer Luftfederanlage, wobei das pneumatische System aufweist: einen Druckspeicher mit einem Druckspeicher-Volumen, und/oder einen Lufttrockner mit einem Lufttrockner-Volumen, eine Galerie und mindestens eine über ein Ventil eines Ventilblocks selektiv gasführend mit der Galerie verbindbare Luftfeder, mit einer Anzahl von Balgvolumina, welche den Luftfedern zugeordnet sind.

Die Erfindung geht aus von der Überlegung, dass die sequenzielle Druckmessung sämtlicher Komponenten wie zum Beispiel Federbälge und Druckspeicher zu einer längeren Dauer der Messung führt. Während dieser Messdauer steht die Funktionalität des Systems nicht zur Verfügung. Eine derartige Einschränkung der Systemverfügbarkeit ist für den Benutzer, insbesondere den Fahrer eines Fahrzeugs, auffällig, wenn die Messung zwischen dem Umschalten einer Komponente erfolgt. Eine Messung zu diesem Zeitpunkt erfolgt insbesondere, um den Luft- und damit Druckverlust zu minimieren, der sonst durch das sequenzielle Aufschalten der Komponenten entstehen würde. Eine derartige, mehrere Sekunden dauernde Messung erfolgt beispielsweise zwischen dem Anheben der Hinterachse und dem Anheben der Vorderachse und ist vom Fahrer wahrnehmbar.

Die Erfindung geht weiter von der Überlegung aus, dass eine sequenzielle Druckmessung dazu führt, dass Ventile des pneumatischen Systems aufgrund des Aufschaltens jeder Komponente für jede Messung für eine wesentlich höhere Anzahl an Schaltvorgängen ausgelegt werden müssen. Dies führt zu einer entsprechenden Steigerung des konstruktiven Aufwandes und insbesondere der Kosten. Ein Aufschalten sämtlicher zu messenden Komponenten führt zu einem Druckverlust , der zum einen zu einem ungewollten Niveauverlust des Fahrzeugs führen kann, und zum anderen durch entsprechende Mehrarbeit, insbesondere des Verdichters, kompensiert werden muss. Die Erfindung hat weiter in Bezug auf den eingangs genannten Stand der Technik erkannt, dass Durch parasitäre Volumen insbesondere des Lufttrockners und der Leitungen kann es zu einem ungewollten Überströmen während der Druckmessung kommen.

Dies ist beispielsweise der Fall, wenn das Fahrzeug mittels Druckluft aus dem Druckspeicher gehoben wird und somit im Lufttrockner ein höherer Druck herrscht als in einer anschließend zu messenden Komponente. In diesem Fall strömt Luft aus dem parasitären Volumen in die zu messende Komponente und führt zu einer ungewünschten Niveauänderung.

Das Konzept der Erfindung bietet mit Vorteil gegenüber dem eingangs genannten Stand der Technik - d.h. mit Vorteil gegenüber einer ausschließlichen Druckmessung und auch mit Vorteil gegenüber einer ausschließlichen rein rechnerischen Druckberechnung-- die Basis für eine verbesserte Druckmessung, mittels der die oben genannten Probleme teilweise oder ganz behoben werden.

Das erfindungsgemäße Verfahren weist weiter folgende Schritte auf:

- Bestimmen von mindestens einer Auslenkung der mindestens einen Luftfeder,
- Bestimmen von dem mindestens einen Balgvolumen eines Federbalgs der mindestens einen Luftfeder auf Basis der mindestens einen Auslenkung.

Das erfindungsgemäße Verfahren weist damit weiter erfindungsgemäß folgende Schritte auf:

- Angabe eines pneumatischen Ersatzmodells für die Volumina, auf Basis einer Massenstrombilanz um ein Bilanzvolumen.
- Berechnen von mindestens einem Druckwert eines Volumens auf Basis des pneumatischen Ersatzmodells.

Insbesondere wird durch die zum einen rechnerische Bestimmung des Druckes auf Basis eines pneumatischen Ersatzmodells und zum anderen unter Berücksichtigung der zur Regelung der Luftfederanlage durchgeführten Schaltvorgänge der Ventile, die Abhängigkeit von Messungen, insbesondere sequenziellen Messungen, durch Sensoren verringert. Weiterhin führt die Berechnung des Druckes zu jedem Schalt- bzw. Regelvorgang des pneumatischen Systems dazu, dass ein aktueller Druckwert nicht nur jeweils zum Zeitpunkt einer Messung zur Verfügung steht, sondern - zumindest in angenäherter Form - zu jeder Zustandsänderung, insbesondere zu jedem Schalt- bzw. Regelvorgang, des pneumatischen Systems.

Insbesondere kann - und dies vor dem Hintergrund der oben beschriebenen Probleme - durch die Bestimmung des Druckes durch Berechnung die Anzahl der Messungen reduziert, bzw. sogar vollständig auf Messungen verzichtet werden. Auf diese Weise wird daher auch die Systemverfügbarkeit der Luftfederanlage erhöht. Weiterhin wird dadurch die Anzahl der benötigten Schaltvorgänge in den Ventilen des pneumatischen Systems reduziert und somit eine Vereinfachung des konstruktiven Aufwands bzw. eine Kostenreduzierung der Ventile erreicht. Auch werden der durch Messungen hervorgerufene Luftverlust und die dadurch erforderliche Kompensationsarbeit, insbesondere des Verdichters, vermieden. Schließlich führt die Reduzierung von Messungen bzw. der Verzicht auf Messungen dazu, dass ein Überströmen von Druckluft aus parasitären Volumen verringert bzw. gänzlich vermieden wird.

Durch das Konzept der Erfindung wird erreicht, dass eine Messung des tatsächlich in der Galerie herrschenden Luftdrucks zu einem Zeitpunkt erfolgen kann, wenn das pneumatische System, insbesondere die Luftfederanlage nicht benötigt wird. Auf Basis des Messergebnisses kann anschließend eine Korrektur des auf Basis des pneumatischen Ersatzmodells bestimmten Druckes erfolgen. Auf diese Weise wird die Verfügbarkeit der Luftfederanlage nicht beeinträchtigt.

In synergetischer Weise wird gemäß dem Konzept der Erfindung eine laufend aktualisierte Bestimmung des Druckes, ohne die Nachteile einer tatsächlichen, insbesondere sequenziellen Messung, ermöglicht. Denn bei der rechnerischen Bestimmung der Drücke gemäß dem Konzept der Erfindung können bereits verfügbare Informationen, insbesondere über den Beladungszustand des Fahrzeugs und über die Federbälge - wie die aktuelle Auslenkung der zugehörigen Luftfeder und somit die Kontur des Federbalges - vorteilhaft genutzt werden.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Insbesondere ist vorgesehen, dass der mindestens eine Druckwert bei einer Zustandsänderung des pneumatischen Systems berechnet wird, wobei die Zustandsänderung eine Änderung der mindestens einen Auslenkung oder ein Regelvorgang der Luftfederanlage oder ein Schaltvorgang mindestens eines Ventils ist. Eine Zustandsänderung kann beispielsweise durch eine Änderung des Beladungszustandes des Fahrzeugs hervorgerufen werden, beispielsweise in dem ein Passagier einsteigt, durch das zusätzliche Gewicht die Fahrzeughöhe abnimmt und sich folglich die mindestens eine Auslenkung einer Luftfeder ändert. Gleichwohl kann eine Zustandsänderung auch durch die Änderung weiterer Umgebungs- und Betriebsparameter, wie zum Beispiel ein sich ändernder Atmosphärendruck, oder eine sich ändernde Umgebungstemperatur, hervorgerufen werden.

Für verschiedene Zwecke bspw. die Verfügbarkeitsberechnung beim Heben aus einem Druckspeicher benötigt die Steuerung eines Luftfederungssystems die Drücke in den Luftfederbalgen und im Druckspeicher. Speziell die Drücke in den Luftfederbalgen sind primär abhängig von der statischen Radlast (Fahrzeugleergewicht plus variable Fahrzeugbeladung) und der Kontur der Federbälge. Durch die Erfassung sämtlicher, den Zustand des pneumatischen Systems beschreibender Parameter, insbesondere durch in das pneumatische System und in das Fahrzeug verbaute Sensoren, kann eine regelmäßige, insbesondere kontinuierliche bzw. quasikontinuierliche, Erfassung von Zustandsänderungen erfolgen. Geeignete Sensoren hierfür sind insbesondere Höhenstandssensoren, Temperatursensoren, und/oder Drucksensoren.

Auch Schaltvorgänge des pneumatischen Systems, insbesondere Schaltvorgänge in Form von Ventilschaltungen, die in Rahmen von Regelvorgängen des pneumatischen Systems automatisch vorgenommen werden, aber auch manuell ausgelöste Schaltvorgänge, stellen Zustandsänderungen des pneumatischen Systems dar. Durch das praktisch ständige Erfassen relevanter Zustandsänderungen des pneumatischen Systems kann in einer derartigen Weiterbildung die Berechnung des mittels des pneumatischen Ersatzmodells bestimmten Druckwertes stets aktuell gehalten werden. Der rechnerisch bestimmte Druckwert entspricht so vorteilhaft möglichst nah dem tatsächlich vorherrschenden Druckwert.

Vorteilhaft ist vorgesehen, dass der mindestens eine Druckwert mittels eines durch einen Drucksensor gemessenen Druckwerts korrigiert wird. Konkret kann dies beinhalten, dass der rechnerisch bestimmte Druckwert zwecks Korrektur mit einem messtechnisch bestimmten Wert abgeglichen werden kann. Insbesondere kann der rechnerisch bestimmte Druckwert in regelmäßigen oder unregelmäßigen Abständen durch den messtechnisch bestimmten Druckwert ersetzt werden.

In einer derartigen Weiterbildung kann ein vorteilhafter Kompromiss aus einem stets aktuellen, den Zustand des pneumatischen Systems zumindest näherungsweise beschreibenden, rechnerisch bestimmten Druckwert, und einem zwar nur in größeren zeitlichen Abständen bestimmten, jedoch genauen, messtechnisch bestimmten Druckwert, erreicht werden.

Insbesondere ist vorgesehen, dass der gemessene Druckwert mittels des Drucksensors gemessen wird in einem Zeitraum, in dem kein Regelvorgang der Luftfederanlage stattfindet. Dies kann konkret beinhalten, dass der tatsächlich im Gesamtvolumen herrschende Druck sensorisch mittels eines Drucksensors bestimmt wird, insbesondere um mit dieser physikalischen Messgröße eine Korrektur der rechnerisch, insbesondere auf Basis des pneumatischen Ersatzmodells bestimmten Druckgröße vorzunehmen. In einer derartigen Weiterbildung erfolgt die Messung insbesondere in einem Zeitraum, in dem die Funktionalität der Druckluftversorgungsanlage nicht benötigt wird. Dies bedeutet, dass in diesem Zeitraum insbesondere keine Hebe- oder Absenkvorgänge des Fahrzeugs durchgeführt werden müssen. Eine derartige Weiterbildung ermöglicht vorteilhaft eine zeitliche Entkopplung der Messung eines Druckluftwertes von der Bereitstellung bzw. rechnerischen Bestimmung eines Druckwertes auf Basis des pneumatischen Ersatzmodells. Für Vorgänge, insbesondere Regelvorgänge der Luftfederanlage, für die ein aktueller Wert des im Gesamtvolumen herrschenden Druckes benötigt wird, kann also statt auf einen gemessenen Druck auf einen rechnerisch bestimmten Druck zurückgegriffen und eine Messung somit vorteilhaft vermieden werden.

Dies führt vorteilhaft dazu, dass der eingangs genannte Nachteil, dass die Verfügbarkeit der Druckluftversorgungsanlage durch eine Messung eines Druckluftwertes, insbesondere eine sequenzielle Messung mehrerer Druckluftwerte, eingeschränkt wird, gemindert oder sogar vollständig vermieden wird.

Insbesondere ist vorgesehen, dass der gemessene Druckwert mittels des Drucksensors gemessen wird während eines Regelvorgangs. Dies kann konkret beinhalten, dass - im Gegensatz zu einem eigens zum Zwecke der Korrektur des rechnerisch bestimmten Druckwertes ausgelösten Messung - in diesem Falle vorteilhaft eine ohnehin stattfindende Messung, insbesondere eine im Rahmen eines Regelvorgang des pneumatischen Systems durchgeführt Druckmessung, genutzt werden kann um den tatsächlichen Druck zu bestimmen, und somit zu den rechnerisch bestimmten Druckwert zu korrigieren. Eine solche Messung kann beispielsweise während des Hebens des Fahrzeugs durch den Kompressor oder während des Füllens des Druckspeichers erfolgen.

Vorteilhaft ist vorgesehen, dass die mindestens eine Auslenkung mittels eines Höhenstandssensors gemessen wird. Hierbei wird insbesondere vorteilhaft ein vorhandener Sensor, der insbesondere zur Bestimmung der Fahrzeughöhe an der jeweiligen Luftfeder dient, zur Bestimmung der Auslenkung der Luftfeder, und somit zur Bestimmung des Balgvolumens genutzt.

Vorteilhaft ist vorgesehen, dass das pneumatische Ersatzmodell gebildet wird durch die Schritte: Bestimmen eines im Bilanzvolumen herrschenden Initialdruckes, Bestimmen mindestens eines Einzel-Initialdrucks in mindestens einem Einzelvolumen, das nicht Teil des Bilanzvolumens ist, Bestimmen sämtlicher in das Bilanzvolumen hineinströmender oder aus dem Bilanzvolumen hinausströmender Luftmassenströme, Bestimmen einer sich im Bilanzvolumen befindenden Gesamt-Luftmasse und/oder Bestimmen mindestens einer sich in einem Volumen befindenden Einzelluftmasse, Berechnen des Druckes mit einer Luftmasse, einem Volumen und einer gemessenen Temperatur auf Basis einer Gasgleichung, insbesondere einer idealen Gasgleichung. Dies beinhaltet konkret, dass die Bildung des pneumatischen Ersatzmodells durch eine Bilanzierung sämtlicher in das Bilanzvolumen ein- und austretenden Luftmassenströme erfolgt, wobei das Volumen des Bilanzvolumens bekannt bzw. bestimmbar ist und somit auf Basis einer Gasgleichung, insbesondere einer idealen Gasgleichung, der in dem Bilanzvolumen herrschende Druck bestimmt werden kann. Hierzu wird weiterhin die Temperatur, insbesondere die in dem Bilanzvolumen herrschende Temperatur, gemessen oder anderweitig, insbesondere näherungsweise, bestimmt. Auf diese Weise wird vorteilhaft die Bestimmung des im Bilanzvolumen herrschenden Druckes gemäß dem Konzept der Erfindung ermöglicht. Desweiteren sei angemerkt, dass die Bezeichnung "Bildung des Ersatzmodells" gleichermaßen als Anwendung des Ersatzmodells bzw. als Aktualisierung der Eingangsvariablen der Gleichungen des Modells zu verstehen ist. Die grundlegenden Zusammenhänge werden also bei jeder rechnerischen Bestimmung des Druckes nicht neu gebildet, sondern lediglich die den Zustand beschreibenden Parameter, insbesondere die Auslenkung der Luftfedern zur Beschreibung des Bilanzvolumens, aktualisiert.

Im Rahmen einer besonders bevorzugten Weiterbildung ist vorgesehen, dass das Bestimmen sämtlicher in das Bilanzvolumen hineinströmender oder aus dem Bilanzvolumen hinausströmender Luftmassenströme weiter folgende Schritte aufweist: Bestimmen durch Berechnen mindestens eines Balg-Luftmassenstroms mittels einer Blendengleichung unter Berücksichtigung mindestens eines Federbalg-Druckes und mindestens eines effektiven Federbalg-Strömungsquerschnitts, und/oder Bestimmen durch Berechnen mindestens eines Speicher-Luftmassenstroms mittels einer Blendengleichung unter Berücksichtigung mindestens eines Speicher-Druckes und mindestens eines effektiven Speicher-Strömungsquerschnitts, und/oder Bestimmen durch Berechnen eines Zuführungs-Luftmassenstroms, mittels einer Blendengleichung unter Berücksichtigung mindestens eines Lufttrockner-Druckes und mindestens eines effektiven Zuführungs-Strömungsquerschnitts, Bilanzieren einer Gesamt-Luftmasse unter Berücksichtigung sämtlicher Luftmassenströme.

Dies beinhaltet konkret insbesondere, dass zwecks Bilanzierung sämtliche in das Bilanzvolumen ein- und ausströmende Luftmassenströme bilanziert werden. Dies soll nicht unbedingt bedeuten, dass bei jeder Bilanzierung zwangsläufig an jeder Drossel, bzw. an jeder im pneumatischen Ersatzmodell durch eine Blendengleichung beschriebenen Stelle ein Luftmassenstrom stattfindet. Vielmehr ist es möglich oder sogar sinnvoll, nach jedem Schaltvorgang eines Ventils eine Bilanzierung und somit eine Neuberechnung des Druckes durchzuführen, um das pneumatische Ersatzmodell zu aktualisieren und den berechneten Wert des Druckes stets auf einem dem tatsächlichen Druck möglichst nah entsprechenden Zustand zu halten. Durch die rechnerische Bestimmung der Massenströme und der darauf basierenden rechnerischen Bestimmung des Druckes gemäß dem Konzept der Erfindung, insbesondere dauerhaft anhand der aktuellen Niveauwerte und der Luftmasse im jeweiligen Volumen, wird vorteilhaft die Abhängigkeit von Sensoren verringert. Dies betrifft insbesondere eine zeitliche Abhängigkeit von einer Messung des Druckes. Eine besonders bevorzugte beispielhafte Ausführungsform einer rechnerischen Bestimmung der Massenströme und der anschließenden rechnerischen Bestimmung des Druckes ist als ein beispielhaftes System von Blendengleichungen in der Beschreibung der Figuren erläutert.

Insbesondere ist vorgesehen, dass das Bestimmen des Lufttrockner-Druckes weiterhin die Schritte aufweist: Bestimmen durch Berechnen eines Verdichter-Luftmassenstroms mittels einer Blendengleichung unter Berücksichtigung mindestens eines Verdichter-Druckes und mindestens eines effektiven Verdichter-Strömungsquerschnitts, Bestimmen durch Berechnen eines Entlüftungs-Luftmassenstroms mittels einer Blendengleichung unter Berücksichtigung mindestens eines Entlüftungs-Druckes und mindestens eines effektiven Entlüftungs-Strömungsquerschnitts. Konkret kann dies beinhalten, dass sowohl der Verdichter als Eingang als auch der Entlüftungsanschluss als Ausgang des als Kontrollvolumen fungierenden Bilanzvolumens zwecks Vereinfachung in dem pneumatischen Ersatzmodell, insbesondere im Rahmen einer weiteren Massenstrombilanz , als eine Zuführung zusammengefasst werden. Auf diese Weise wird die Berechnung des Druckes auf Basis des pneumatischen Ersatzmodells vorteilhaft vereinfacht.

Vorteilhaft ist vorgesehen, dass das Bestimmen des im Bilanzvolumen herrschenden Initialdruckes auf Basis des gemessenen Druckes erfolgt. Dies beinhaltet konkret, dass ein gemessener Druck als Eingangsgröße für die rechnerische Bestimmung des Druckes mittels des pneumatischen Ersatzmodells verwendet wird. Dies hat den Vorteil, dass dieser Wert in einem Zeitraum vor der Berechnung, insbesondere während die Funktionalität der Druckluftversorgungsanlage nicht benötigt wurde, bestimmt werden konnte. Auch kann die rechnerische Bestimmung des aktuellen Druckwerts auf einem möglichst aktuellen Wert, der insbesondere einer geringen Abweichung von dem tatsächlich in dem Bilanzvolumen und/oder einem Einzelvolumen herrschenden Druck aufweist, durchgeführt werden.

Im Rahmen einer besonders bevorzugten Weiterbildung ist vorgesehen, dass das Bestimmen des im Bilanzvolumen herrschenden Initialdruckes auf Basis des berechneten Druckes eines vorangegangenen Anwendungszyklus des pneumatischen Ersatzmodells erfolgt. Dies beinhaltet konkret, dass ein Wert als Eingangsgröße für die rechnerische Bestimmung des Druckes verwendet wird, welcher ebenfalls rechnerisch bestimmt wurde, und zwar insbesondere in einer vorangegangenen Anwendung des pneumatischen Ersatzmodells. Auf diese Weise wird zwar in Kauf genommen, dass sich möglicherweise Abweichungen von dem tatsächlich im Bilanzvolumen herrschenden Druck über den Verlauf einer oder mehrerer vorangegangener Berechnungen aufsummieren. Jedoch kann dieses Risiko durch die Güte des pneumatischen Ersatzmodells, die Berücksichtigung von systematischen Abweichungen des Modells von der Wirklichkeit durch Korrekturfaktoren und insbesondere die erfolgende Messung des tatsächlich im Bilanzvolumen herrschenden Druckes zwecks Korrektur verringert, bzw. beherrscht werden. Auf diese Weise wird vorteilhaft die Abhängigkeit von einer sensorischen Messung verringert.

Insbesondere ist vorgesehen, dass der Verdichter-Druck und/oder der Verdichter-Luftmassenstrom durch eine Förderstromkennlinie ermittelt wird. Dies beinhaltet konkret, dass mittels eines bekannten Zusammenhangs, der in Form einer Förderkennlinie beschrieben ist, die Förderleistung des Verdichters, insbesondere ein Volumenstrom in Abhängigkeit eines Druckes, bestimmt werden kann. Auf dieser Basis kann, in vorteilhaft vereinfachter Weise, die Bestimmung des vom Verdichter geförderten Luftmassenstroms bei der Bilanzierung der Gesamt-Luftmasse erfolgen.

Im Rahmen einer besonders bevorzugten Weiterbildung ist vorgesehen, dass die Förderstromkennlinie in Abhängigkeit von Umgebungsparametern, insbesondere einen atmosphärischen Umgebungsdruck und/oder einer Kompressorversorgungsspannung, angepasst wird. Dies bedeutet konkret, dass der in der Förderstromkennlinie beschriebene Zusammenhang zwischen Volumenstrom und Druck in Abhängigkeit von den Verdichter beeinflussenden Umgebungsparametern angepasst wird. Dies erfolgt insbesondere, um die Leistung des Verdichters, die durch die geänderten Umgebungsparameter beeinflusst wird, bei der Bestimmung der Luftmassenströme zu Berücksichtigen. Auf diese Weise wird vorteilhaft das Ergebnis der Berechnung verbessert, insbesondere in dem es der Realität näher entspricht.

Im Rahmen einer besonders bevorzugten Weiterbildung ist vorgesehen, dass der Entlüftungs-Druck durch den atmosphärischen Umgebungsdruck gegeben ist. Dies bedeutet konkret, dass bei der Anwendung des pneumatischen Ersatzmodells und insbesondere bei der Bestimmung des Entlüftungs-Luftmassenstroms, bei der Anwendung der Blendengleichung der Umgebungsdruck, insbesondere der außerhalb des Fahrzeugs herrschende Luftdruck, verwendet wird. Dieser Wert kann beispielsweise durch einen weiteren, nicht notwendigerweise zur Druckluftversorgungsanlage gehörenden Sensor, gemessen werden oder, insbesondere auf Basis anderer Messwerte und Informationen, wie z.B. der aktuellen geographischen Höhe des Fahrzeugs, bestimmt, insbesondere näherungsweise bestimmt, werden.

Insbesondere ist vorgesehen, dass Druckluft durch einen Verdichter erzeugt wird, falls der bestimmte Druck oder der gemessene Druck unterhalb eines Minimal-Druckwertes liegt. Dies bedeutet konkret, dass bei einem Verfahren gemäß dem Konzept der Erfindung ein Druckwert insbesondere rechnerisch und/oder aus einer Kombination aus Berechnungen und Messungen bestimmt wird, und auf Basis des bestimmten Wertes im Sinne einer Regelschleife bei einem Unterschreiten eines kritischen Minimalwertes Maßnahmen zur Erhöhung des Druckes durchgeführt werden. Eine solche Maßnahme ist insbesondere das Erzeugen von Druckluft zum Befüllen eines Druckspeichers, um eine ausreichende Druckluftmenge zur Durchführung von zu erwartenden Niveauregelvorgängen der Luftfederanlage bereitzustellen. Auf diese Weise wird vorteilhaft die Verfügbarkeit und Zuverlässigkeit des pneumatischen Systems und insbesondere der Druckluftversorgungsanlage erhöht.

Vorteilhaft ist vorgesehen, dass Druckluft über einen Entlüftungsanschluss abgelassen wird, falls der bestimmte Druck oder der gemessene Druck oberhalb eines Maximal-Druckwertes liegt. Analog zu der vorhergehend beschriebenen Weiterbildung bedeutet dies konkret, dass bei einem Verfahren gemäß dem Konzept der Erfindung ein Druckwert insbesondere rechnerisch und/oder aus einer Kombination aus Berechnungen und Messungen bestimmt wird, und auf Basis des bestimmten Wertes im Sinne einer Regelschleife bei einem Überschreiten eines kritischen Minimalwertes Maßnahmen zur Verringerung des Druckes durchgeführt werden. Eine solche Maßnahme ist insbesondere das Ablassen von Druckluft über einen Entlüftungsanschluss. Auf diese Weise werden kritische Druckzustände, die durch einen überkritischen Luftdruck innerhalb des Bilanzvolumens verursacht werden können, in vorteilhafter Weise vermieden.

Die Aufgabe, betreffend das pneumatische System, wird durch die Erfindung mit einem pneumatischen System nach Anspruch 17 gelöst.

Die Aufgabe, betreffend das Fahrzeug, wird durch die Erfindung mit einem Fahrzeug nach Anspruch 18 gelöst.

Erfindungsgemäß ist das pneumatische System gemäß Anspruch 17 ausgebildet.

Auch das erfindungsgemäße pneumatische System nutzt die Vorteile des Verfahrens in vorteilhafter Weise. Sie ermöglicht durch die Druckbestimmung auf Basis des pneumatischen Ersatzmodells eine Druckbestimmung und Druckregelung mit den im Zusammenhang mit dem Verfahren bereits genannten Vorteilen. Dies ist insbesondere bei PKWs vorteilhaft, da durch eine rechnerische Bestimmung die Abhängigkeit von sensorischen Messungen verringert werden kann und somit Messungen, welche insbesondere zu Wartezeiten führen, die durch den Nutzer des Fahrzeugs wahrnehmbar sind, verringert oder vermieden werden können.

Ausführungsformen der Erfindung werden nun nachfolgend anhand der Zeichnung beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet. Weitere Vorteile, Merkmale und Einzelheiten der Erfindung ergeben sich aus der nachfolgenden Beschreibung der bevorzugten Ausführungsformen sowie anhand der Zeichnung; diese zeigt in:

Fig. 1    eine bevorzugte Ausführungsform eines pneumatischen Systems mit einer Druckluftversorgungsanlage und einer Luftfederanlage,

Fig. 2    eine schematische Darstellung eines pneumatischen Ersatzmodells,

Fig. 3    ein schematisches Ablaufdiagramm zur Bestimmung eines Druckwertes mittels des pneumatischen Ersatzmodells,

Fig. 4    einen zeitlichen Verlauf von Schaltzuständen eines pneumatischen Systems und gemessenem sowie berechnetem Druck,

Fig. 5    eine stark vereinfachte Darstellung eines Fahrzeugs mit einem pneumatischen System.

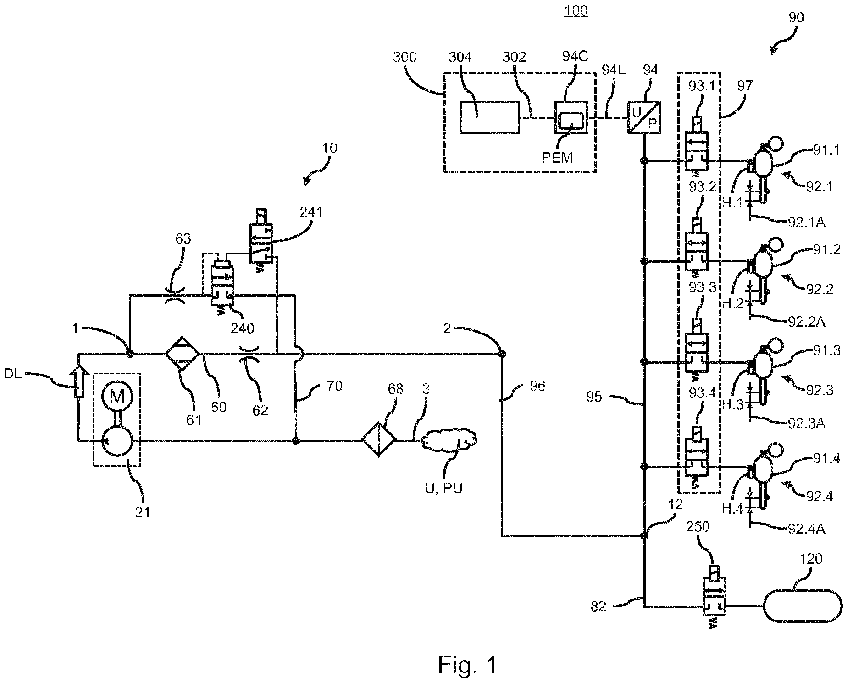

Fig. 1 zeigt eine bevorzugte Ausführung eines pneumatischen Systems 100 mit einer Druckluftversorgungsanlage 10 und einer Luftfederanlage 90. Die Druckluftversorgungsanlage 10 weist eine Druckluftzuführung 1, einen Druckluftanschluss 2 zur Luftfederanlage 90 sowie einen Entlüftungsanschluss 3 zur Umgebung U, in der ein atmosphärischer Umgebungsdruck PU herrscht, auf. Ferner umfasst die Druckluftversorgungsanlage 10 eine pneumatische Hauptleitung 60 zwischen der Druckluftzuführung 1 und dem Druckluftanschluss 2. Die pneumatische Hauptleitung 60 weist einen Lufttrockner 61 sowie eine erste Drossel 62 auf. Eine Entlüftungsleitung 70 der Druckluftversorgungsanlage 10 verbindet die Druckluftzuführung 1 über eine zweite Drossel 63 und ein Entlüftungsventil 240 mit dem Entlüftungsanschluss 3. Ein Galeriehauptanschluss 12 der Luftfederanlage 90 ist mit dem Druckluftanschluss 2 über eine Versorgungsleitung 96 verbunden.

Weiterhin ist ein Steuerventil 241 derart mit dem Entlüftungsventil 240 verbunden, dass bei entsprechender Stellung des Steuerventils 241 die in der pneumatischen Hauptleitung 60 befindliche Druckluft, zum Stellen des Entlüftungsventils genutzt werden kann. Hierbei sorgt die erste Drossel 62 dafür, dass sich immer ein ausreichend hoher Staudruck vor der ersten Drossel 62 bildet, um das Ventil 240 zu öffnen. Dieses kann auf diese Weise von der dargestellten gesperrten Stellung in eine Regenerationsstellung gebracht werden, in der Luft von der Druckluftzuführung 1 über die Entlüftungsleitung 70 zum Entlüftungsanschluss 3 strömen kann. Auf diese Weise kann der Lufttrockner 61 zwecks Regeneration mittels Druckluft aus dem Druckspeicher entgegen der eigentlichen Förderrichtung durchströmt werden.

Auf der rechten Seite der Fig. 1 gut erkennbar ist eine Luftfederanlage 90 eines Fahrzeugs bereitgestellt. Die Luftfederanlage 90 weist eine Galerie 95 auf, an der, jeweils pneumatisch trennbar durch ein Wegeventil 93.1, 93.2, 93.3, 93.4, eine Balg-Zweigleitung angeschlossen ist, die zu jeweils einem Balg 91.1, 91.2, 91.3, 91.4 einer Luftfeder 92.1, 92.2, 92.3, 92.4 führt. Vorliegend ist eine Gesamtheit von vier Wegeventilen 93.1, 93.2, 93.3, 93.4 in einem Ventilblock 97 angeordnet. Je nach Druck bzw. Luftmenge, die sich in dem Balg 91.1, 91.2, 91.3, 91.4 befindet, wird die Luftfeder 92.1, 92.2, 92.3, 92.4 um eine Auslenkung 92A, 92.1A, 92.2A, 92.3A, 92.4A ausgelenkt. Mit der Galerie 95 verbunden ist ein Drucksensor 94. Vorliegend ist der Drucksensor 94 mit einer Sensorleitung 94L mit einer Druckbestimmungseinheit 94C, welche auf Basis eines pneumatischen Ersatzmodells PEM einen Druck P berechnen kann. Über die Sensorleitung 94L kann insbesondere ein gemessener Druckwert PMESS vom Drucksensor 94 zwecks Korrektur an die Druckbestimmungseinheit 94C übermittelt werden. Die Druckbestimmungseinheit 94C ist weiterhin einer Einrichtung 300 zum Steuern- und Regeln des pneumatischen Systems 100 zugeordnet. Hier ist sie über eine Regelleitung 302 signalleitend mit einem Druckregler 304 verbunden. Vereinfacht kann die Druckbestimmungseinheit 94C somit als Messglied der Einrichtung 300 betrachtet werden, obwohl ausdrücklich gemäß dem Konzept der Erfindung der Druck nicht ausschließlich per Messung, sondern insbesondere durch Berechnung erfolgt. Weiterhin ist der Druckregler 304 zwecks Beeinflussung der Luftmassenströme und Druckzustände signalleitend mit sämtlichen steuerbaren Ventilen 93.1, 93.2, 93.3, 93.4, 241, 250 des pneumatischen Systems 100 verbunden. Diese Verbindungen sind vorliegend aus Gründen der Übersichtlichkeit nicht dargestellt. Eine derartige Einrichtung kann beispielsweise durch eine Electronic Control Unit (ECU) gebildet sein.

Weiterhin weist die Druckluftversorgungsanlage 10 vorliegend einen Druckspeicher 120 auf. Der Druckspeicher 120 ist über eine Druckspeicher-Zuleitung 82 mit dem Galeriehauptanschluss 12 gasführend verbunden. Über ein Druckspeicher-Ventil 250 kann diese Verbindung selektiv unterbrochen werden.

Die Verdichteranordnung 21 wird vorliegend von einem Motor M angetrieben und saugt zwecks Verdichtung von Druckluft DL Luft über den Entlüftungsanschluss 3 an. Zwischen Verdichteranordnung 21 und Entlüftungsanschluss 3 ist ein Luftfilter 68 angeordnet.

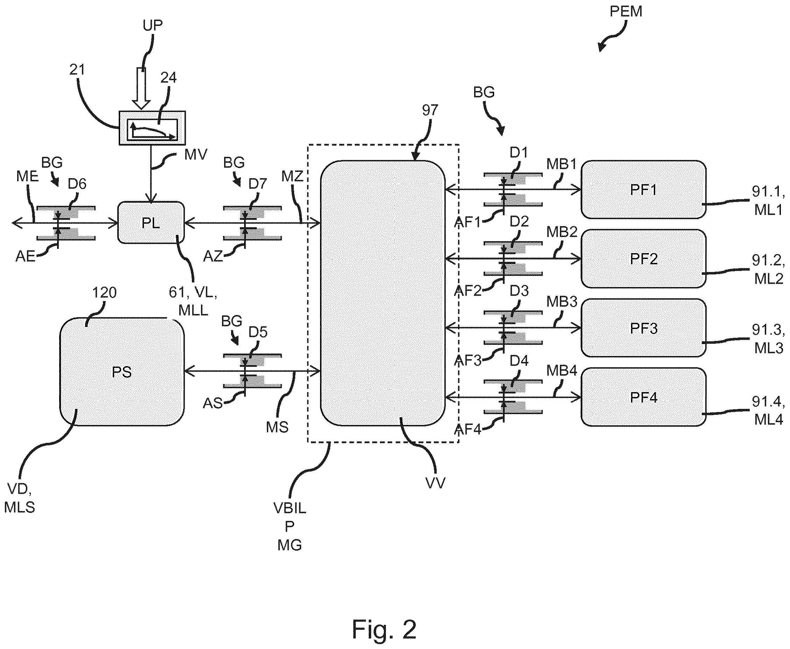

Fig. 2 zeigt eine schematische Darstellung eines pneumatischen Ersatzmodells PEM gemäß dem Konzept der Erfindung. Hierbei ist ein pneumatisches System, wie es z.B. in Fig. 1 dargestellt ist, in vereinfachter Form, insbesondere als ein System aus Volumina und Drosseln, als Grundlage für ein Modell zur rechnerischen Druckbestimmung aufgebaut.

Vorliegend bildet der Ventilblock 97 mit seinem Ventilblock-Volumen VV ein sämtliche wesentlichen Massenströme berücksichtigendes Bilanzvolumen VBIL, in dem sich eine Gesamt-Luftmasse MG befindet. Vier Federbälge 91.1, 91.2, 91.3, 91.4 sind an den Ventilblock 97 angeschlossen. Die zu den jeweiligen Federbälgen führenden Leitungen und Ventile sind in dem pneumatischen Ersatzmodells PEM vereinfacht durch jeweils eine Drossel D1, D2, D3, D4 berücksichtigt. Die vom Ventilblock 97 zum Druckspeicher 120 führenden Leitungen und Ventile, insbesondere das Druckspeicher-Ventil 250 und die Druckspeicher-Zuleitung 82, sind durch die Drossel D5 berücksichtigt. Bei geöffneter Stellung des jeweiligen Wegeventils 93.1, 93.2, 93.3, 93.4 bewegt sich jeweils ein Balg-Massenstrom MB1, MB2, MB3, MB4 durch die jeweilige Drossel D1, D2, D3, D4. Abhängig von den jeweiligen Druckverhältnissen erfolgt diese Bewegung entweder vom Ventilblock 97 zu dem jeweiligen Federbalg 90.1, 91.2, 91.3, 91.4, was ein Anheben der jeweiligen Luftfeder zur Folge hätte, oder in umgekehrte Richtung, was ein Absenken der jeweiligen Luftfeder zur Folge hätte.

Analog zu den Balg-Massenströmen MB1, MB2, MB3, MB4 bewegt sich bei geöffneter Stellung des Druckspeicher-Ventils 250 ein Speicher-Luftmassenstrom MS durch die Drossel D5. Bei einem Befüllen des Druckspeichers 120 kann sich der Speicher-Luftmassenstrom MS vom Ventilblock 97 zum Druckspeicher 120 bewegen. Bei einer Nutzung von im Druckspeicher 120 gespeicherter Druckluft, insbesondere zum Befüllen der Federbälge 91.1, 91.2, 91.3, 91.4, ist die Bewegungsrichtung des Speicher-Luftmassenstroms MS hingegen umgekehrt. Der Druckspeicher 120 wird in der Rechnung wie ein Balgvolumen 91.1V, 91.2V, 91.3V, 91.4V behandelt, wobei jedoch beim Druckspeicher 120 das Druckspeicher-Volumen VD fix ist.

Schließlich ist der Lufttrockner 61, ebenfalls vereinfacht, über eine Drossel D7 an den Ventilblock 97 angeschlossen. Auf diese Weise kann sich ein Zuführungs-Massenstrom MZ durch die Drossel D7 bewegen. Der Lufttrockner 61 wiederum ist mit der Verdichteranordnung 21 verbunden, so dass ein Verdichter-Luftmassenstrom MV in den Lufttrockner 61 strömen kann. Weiterhin ist der Lufttrockner 61 über einen hier nicht dargestellten Entlüftungsanschluss 3 mit der Umgebung verbindbar. Diese Verbindung ist in dem pneumatischen Ersatzmodell PEM durch eine Drossel D6 modelliert. Durch die Drossel D6 kann sich ein Entlüftungs-Luftmassenstrom ME bewegen.

Sämtliche Massenströme durch die Drosseln D1 bis D7 lassen sich durch Blendengleichungen BG beschreiben. Die jeweilige Blendengleichung BG beschreibt einen Massenstrom durch die jeweilige Drossel in Abhängigkeit der Fluideigenschaften, des Strömungsdurchmessers und der Druckverhältnisse auf beiden Seiten der jeweiligen Drossel. Hierbei wird unterschieden zwischen überkritischen und unterkritischen Strömungen.

Bei einer überkritischen Strömung wird - vereinfacht dargestellt - der jenseits der Drossel herrschende Gegendruck vernachlässigt, da er unterhalb eines kritischen Werts liegt.

Der Massenstrom berechnet sich in diesem Fall wie folgt:

$$\dot{m} = A_{eff} \cdot \left(\frac{2}{\kappa+1}\right)^{\frac{\kappa}{\kappa-1}} \cdot \sqrt{\frac{\kappa}{\kappa+1}} \cdot \sqrt{2 \cdot p_i \cdot \rho_i}$$

Im Fall einer unterkritischen Strömung hingegen wird der Gegendruck bei der Berechnung des Massenstroms berücksichtigt, und zwar in der Form:

$$\dot{m} = A_{eff} \cdot \left(\frac{2}{\kappa+1}\right)^{\frac{\kappa}{\kappa-1}} \cdot \sqrt{\frac{\kappa}{\kappa+1} \cdot \left(\frac{p_a}{p_i}\right)^{\frac{1}{\kappa}} \cdot \left(\left(\frac{p_a}{p_i}\right)^{\frac{1}{\kappa}} - \left(\frac{p_a}{p_i}\right)\right)} \cdot \sqrt{2 \cdot p_i \cdot \rho_i}$$

Hierbei beschreibt $p_i$ den Eingangsdruck der Drossel und $p_a$ den Ausgangs- bzw. Gegendruck, $\rho_i$ und $\rho_a$ entsprechend Eingangs- und Ausgangsdichte, $\kappa$ den Isentropenexponenten und $A_{eff}$ den effektiven Strömungsdurchmesser der Blende bzw. Drossel. Mittels dieser Gleichungen und der vorgenommenen Vereinfachung der jeweiligen Leitungen durch Drosseln D1 bis D7 können somit bei Vorliegen insbesondere der jeweiligen Drücke die fehlenden Größen, insbesondere die Massenströme, durch die jeweiligen Drosseln D1 bis D7 bestimmt werden. Insbesondere können auf diese Weise die Massenströme in den und aus dem Ventilblock 97 bestimmt werden, um die Gesamt-Luftmasse MG und insbesondere weiter auf Basis der Massenstrombilanz BIL die Einzelluftmassen ML1, ML2, ML3, ML4, MLS, MLL zu bestimmen.

Die Drücke PF1, PF2, PF3, PF4 der Federbälge 91.1 bis 91.4 sind insbesondere abhängig von den Auslenkungen 92.1A, 92.2A, 92.3A, 92.4A der jeweils zugehörigen Luftfeder 92.1, 92.2, 92.3, 92.4 sowie des momentanen Beladungszustands und können beispielsweise näherungsweise ermittelt werden, indem die aktuelle Höhe, d. h. die Auslenkung der jeweiligen Luftfeder, gemessen wird. Die Bestimmung der Auslenkung erfolgt insbesondere über einen Höhenstandssensor H.1, H.2, H.3, H.4 an dem jeweiligen Federbalg 91.1, 91.2, 91.3, 91.4 und/oder der jeweiligen Achse. Gegebenenfalls können bei dieser näherungsweisen Bestimmung weitere Parameter, insbesondere die in dem oder in der Nähe des jeweiligen Volumens gemessene Temperatur, zwecks Korrektur in der Berechnung berücksichtigt werden.

Weiterhin lässt sich ein von der Verdichteranordnung 21 geförderter Volumenstrom in Abhängigkeit des Druckes anhand einer Förderstromkennlinie 24 bestimmen. Auf diese Weise kann zumindest näherungsweise der Verdichter-Luftmassenstrom MV bestimmt werden.

Die Förderstromkennlinie 24 eines Kompressors hängt von externen Faktoren, nämlich Umgebungsparametern UP ab. Diese können teilweise durch vorhandene Sensoren im Fahrzeug berücksichtig werden (bspw. Umgebungsdrucksensor der Klimaanlage). Die Toleranzen des Kompressors, die sich bspw. durch mechanische Fertigungstoleranzen oder Abnutzung ergeben, könnten durch Selbstkalibrierung beim Auffüllen eines bekannten Volumens (z.B. beim Auffüllen des Druckspeichers 120 oder des Lufttrockners 61) korrigiert werden. Die Genauigkeit der Druckberechnungen könnte dadurch signifikant erhöht werden.

Weiterhin lässt sich das Bilanzvolumen VBIL sämtlicher in dem pneumatischen Ersatzmodell berücksichtigten Komponenten beschreiben. Vorliegend wird das Bilanzvolumen VBIL durch das Volumen des Ventilblocks 97 gebildet. Durch Bilden einer Massenstrombilanz BIL können sämtliche in das Bilanzvolumen VBIL eintretende und aus dem Bilanzvolumen VBIL austretende Luftmassenströme MB1, MB2, MB3, MB4, MS, MZ bestimmt werden.

Bei den Einzelvolumina wird unterschieden zwischen unveränderlichen Volumina - insbesondere das Druckspeicher-Volumen VD und das Lufttrockner-Volumen VL - und veränderlichen Volumina - insbesondere die Balgvolumina 91.1V, 91.2V, 91.3V, 91.4V. Hierbei sind die Volumina 91.1V, 91.2V, 91.3V, 91.4V der Federbälge 91.1, 91.2, 91.3, 91.4 im Wesentlichen abhängig von den Auslenkungen 92.1A, 92.2A, 92.3A, 92.4A der jeweils zugehörigen Luftfeder 92.1, 92.2, 92.3, 92.4.

Für verschiedene Zwecke bspw. die Verfügbarkeitsberechnung beim Heben aus einem Druckspeicher benötigt die Steuerung eines Luftfederungssystems die Drücke in den Luftfederbalgen und im Druckspeicher. Speziell die Drücke in den Luftfederbalgen sind primär abhängig von der statischen Radlast (Fahrzeugleergewicht + variable Fahrzeugbeladung) und der Kontur der Federbälge. Da die Auslenkungen 92.1A, 92.2A, 92.3A, 92.4A mittels häufig bereits im Fahrzeug vorhandenen Sensoren, insbesondere Höhenstandssensoren, messbar sind, stehen somit die zur Berechnung der Massenstrombilanz BIL benötigten Informationen zur Verfügung.

Mit dem Bilanzvolumen VBIL kann auf Basis der Gesamt-Luftmasse MG mittels einer Gasgleichung (GG), insbesondere einer idealen Gasgleichung (IGG) nunmehr der in dem Bilanzvolumen herrschende Druck berechnet werden. Analog für ein Einzelvolumen 91.1V, 91.2V, 91.3V, 91.4V, VD, VL auf Basis einer dem Einzelvolumen zugeordneten Einzelluftmasse ML1, ML2, ML3, ML4, MLS, MLL der in dem Einzelvolumen herrschende Druck berechnet werden. Es gilt allgemein:

$$P = \frac{M * R * T}{V}$$

Hierbei beschreibt V das Volumen, M die Luftmasse, T die in dem Volumen V gemessene oder angenommene Temperatur und R die Gaskonstante.

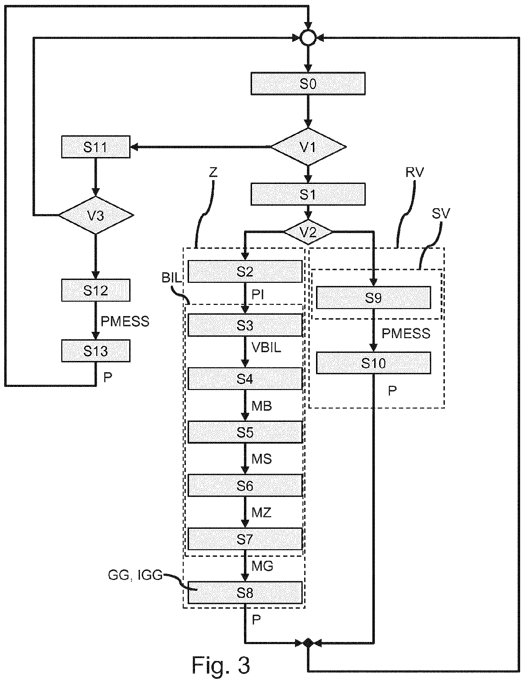

Fig. 3 beschreibt schematisch einen möglichen Ablauf, insbesondere zur Druckbestimmung, mittels des pneumatischen Ersatzmodells gemäß dem Konzept der Erfindung.

In einem Schritt S0 wird zunächst laufend überprüft, ob eine Zustandsänderung ZA des pneumatischen Systems 100 stattfindet. Eine Zustandsänderung ZA kann insbesondere in einer Änderung der Fahrzeughöhe, also der Änderung mindestens einer Auslenkung 92A, 92.1A, 92.2A, 92.3A, 92.4A, oder einem anderen Schaltvorgang SV, beispielsweise einem Öffnen des Entlüftungsventils 250, liegen. Findet eine Zustandsänderung ZA statt, wird über eine Verzweigung V1 zwecks Bestimmung eines neuen Druckwertes P, PL, PV, PS, PE, PF1, PF2, PF3, PF4 mit der Ausführung eines Schrittes S1 fortgefahren.

In Schritt S1 wird überprüft, ob es sich bei der Zustandsänderung ZA um einen Schaltvorgang SV handelt, bei dem - insbesondere im Rahmen eines Regelvorgangs - ein Druck PMESS gemessen wird. Dies kann beispielsweise bei dem Heben des Fahrzeugs durch den Verdichter 21, insbesondere Kompressor, oder dem Füllen des Druckspeichers 120 durch den Verdichter 21 der Fall sein.

Ist dies nicht der Fall, wird der Programmablauf über eine Verzweigung V2 zu dem Schritt S2 zwecks der rechnerischen Bestimmung des Druckes P - in einem Anwendungszyklus Z, in dem das pneumatische Ersatzmodel PEM gemäß dem Konzept der Erfindung angewendet wird - geführt.

Im Schritt S2 erfolgt ein erstes Festlegen eines Initialdruckes PI. Dies kann insbesondere über einen in einem vorherigen Durchlauf des Verfahrens bzw. Anwendung des pneumatischen Ersatzmodells PEM berechneten Wert P oder über einen per Drucksensor 94 gemessenen Wert PMESS geschehen.

In den anschließenden Schritten S3-S7 erfolgt die Erstellung einer Massenstrombilanz BIL um ein Bilanzvolumen VBIL. In Schritt S3 erfolgt die Bestimmung eines Bilanzvolumens VBIL. Vorliegend wird das Bilanzvolumen durch das Ventilblockvolumen VV des Ventilblocks 97 gebildet, insbesondere weil sämtliche für die Druckbestimmung relevanten Massenströme, insbesondere die Massenströme MB, MB1, MB2, MB3, MB4, MS, MZ, durch den Ventilblock 97 gehen.

In einem Schritt S4 erfolgt ein Bestimmen mindestens eines Balg-Luftmassenstroms MB, MB1, MB2, MB3, MB4 mittels einer Blendengleichung BG unter Berücksichtigung mindestens eines Federbalg-Druckes PF, PF1, PF2, PF3, PF4 und mindestens eines effektiven Federbalg-Strömungsquerschnitts AF, AF1, AF2, AF3, AF4. Hierbei sind die Drücke PF1, PF2, PF3, PF4 der Federbälge 91.1 bis 91.4 abhängig von den Auslenkungen 92.1A, 92.2A, 92.3A, 92.4A der jeweils zugehörigen Luftfeder 92.1, 92.2, 92.3, 92.4 sowie des momentanen Beladungszustand und können näherungsweise ermittelt werden, wenn bei einem Absenken der jeweiligen Luftfeder die aktuelle Höhe, insbesondere die Auslenkung der Luftfeder, gemessen wird.

Analog dazu erfolgt in Schritt S5 das Bestimmen mindestens eines Speicher-Luftmassenstroms MS mittels einer Blendengleichung unter Berücksichtigung mindestens eines Speicher-Druckes PS und mindestens eines effektiven Speicher-Strömungsquerschnitts AS.

In einem Schritt S6 erfolgt weiterhin das Bestimmen eines Zuführungs-Luftmassenstroms MZ, mittels einer Blendengleichung BG unter Berücksichtigung mindestens eines Lufttrockner-Druckes PL und mindestens eines effektiven Zuführungs-Strömungsquerschnitts AZ. Hierbei ist, wie bereits in Fig. 2 dargestellt, der Lufttrockner-Druck PL weiterhin abhängig von dem Verdichter-Luftmassenstrom MV sowie dem Entlüftungs-Luftmassenstrom ME. Der Lufttrockner weist ein konstantes Lufttrockner-Volumen VL auf. Der Verdichter-Luftmassenstrom MV ergibt sich hierbei insbesondere aus einer Förderstromkennlinie des Verdichters. Der Entlüftungs-Luftmassenstrom ME ist ebenfalls durch eine Blendengleichung unter Berücksichtigung der Drossel D6 mit einem effektiven Entlüftungs-Strömungsquerschnitt AE, sowie dem Entlüftungs-Druck PE bestimmbar. Insbesondere wird zur Ermittlung des Zuführungs-Luftmassenstroms MZ eine weitere Massenstrombilanz BIL' um das Lufttrocknervolumen VL des Lufttrockners 61 gebildet.

Im Zusammenhang mit den Schritten S4, S5 und S6 sei angemerkt, dass nicht immer zwangsläufig sämtliche Luftmassenströme bestimmt werden müssen bzw. bei der Bestimmung einzelne oder mehrere Luftmassenströme gleich null sein können. Insbesondere ist es sogar sinnvoll und bevorzugt, lediglich einzelne Luftmassenströme zu bestimmen, und zwar zu dem jeweiligen Zeitpunkt, wenn ein entsprechendes Ventil zur Auslösung jenes, insbesondere einzelnen, Luftmassenstroms betätigt wird.

Nach Bestimmung des Luftmassenstroms oder der Luftmassenströme erfolgt in einem anschließenden Schritt S6 eine Bilanzierung der Luftmassenströme, insbesondere der Luftmassenströme MB, MB1, MB2, MB3, MB4, MS, MZ zur Berechnung einer Gesamt-Luftmasse MG.

Nach der Bilanzierung in Schritt S7 stehen die benötigten Informationen zur Verfügung, um in Schritt S8 den Druck P, PL, PV, PS, PE, PF1, PF2, PF3, PF4 in einer zweiten Bestimmung neu zu berechnen. Hierzu wird zum Beispiel auf Basis einer Gasgleichung (GG), insbesondere einer idealen Gasgleichung (IGG) der Druck P unter Berücksichtigung der Gesamt-Luftmasse MG des Bilanzvolumens VBIL einer, insbesondere gemessenen, Temperatur T berechnet.

Auch kann gemäß dem Konzept der Erfindung ein einzelner Druckwert PL, PV, PS, PE, PF1, PF2, PF3, PF4 berechnet werden. Zur Ermittlung eines einzelnen Druckwerts PL, PV, PS, PE, PF1, PF2, PF3, PF4 eines Einzelvolumens 91V, 91.1V, 91.2V, 91.3V, 91.4V, VD, VL wird ebenfalls die der Massenstrombilanz BIL zugrunde gelegt. Auf Basis von einem diesem Einzelvolumen 91V, 91.1V, 91.2V, 91.3V, 91.4V, VD, VL zugeordneten Luftmassenstrom MB, MB1, MB2, MB3, MB4, MS, MZ, der mittels der Massenstrombilanz BIL berechnet wurde, kann nämlich die durch den einzelnen Luftmassenstrom MB, MB1, MB2, MB3, MB4, MS, MZ, hervorgerufene Veränderung des Drucks PL, PV, PS, PE, PF1, PF2, PF3, PF4 berechnet werden. Durch einen Luftmassenstrom MB, MB1, MB2, MB3, MB4, MS, MZ in ein oder aus einem Einzelvolumen 91V, 91.1V, 91.2V, 91.3V, 91.4V, VD, VL hat sich nämlich die jeweilige Einzelluftmasse ML1, ML2, ML3, ML4, MLS, MLL in diesem Einzelvolumen 91V, 91.1V, 91.2V, 91.3V, 91.4V, VD, VL verändert, und damit auch der Druck PL, PV, PS, PE, PF1, PF2, PF3, PF4 in diesem Volumen.

Beispielsweise kann für das Speichervolumen VD, mittels des durch die Massenstrombilanz BIL bestimmten Speicher-Luftmassenstroms MS - und die somit in dem Druckspeicher 120 vorhandene Druckspeicher-Einzelluftmasse MLS — die Druckveränderung im Druckspeicher 120 und somit der Speicher-Druck PS bestimmt werden. Auch für die veränderlichen Balgvolumina 91.1V, 91.2V, 91.3V, 91.4V kann — mittels der zusätzlichen Information über die Auslenkung 92A, 92.1A, 92.2A, 92.3A, 92.4A — analog mit dem entsprechenden Balg-Massenstrom MB1, MB2, MB3, MB4 — und den daraus resultierenden Balg-Einzelluftmassen ML1, ML2, ML3, ML4 — der jeweils zugehörige Federbalg-Druck PF1, PF2, PF3, PF4 berechnet werden.

Wird in Schritt S1 festgestellt, dass es sich um einen Schaltvorgang SV handelt, bei dem ein Druck PMESS gemessen wird, wird dieser gemessene Druck in Schritt S9 ermittelt. Hierzu wird der gemessene Druckwert, der insbesondere im Rahmen eines Regelvorgangs RV gemessen wird, insbesondere über eine hier nicht näher dargestellte Steuerung des pneumatischen Systems ausgelesen. In Schritt S10 erfolgt dann ein Abgleich von dem gemessenen Wert PMESS und dem - insbesondere in einem vorangegangenen Zyklus in den Schritten S2 bis S8 - berechneten Wert P und insbesondere eine Korrektur des berechneten Wertes P durch den gemessenen Wert PMESS. Auf diese Weise kann vorteilhaft ein ohnehin primär zu einem anderen Zweck, insbesondere einen Regelvorgang, gemessener Wert PMESS zur Korrektur des rechnerisch bestimmten Wertes P genutzt werden, und die Genauigkeit des Verfahrens somit verbessert werden. Durch ein entsprechendes Aufschalten eines Einzelvolumens 91V, 91.1V, 91.2V, 91.3V, 91.4V, VD, VL auf den Drucksensor 94 kann analog ein berechneter Einzeldruck PL, PV, PS, PE, PF1, PF2, PF3, PF4 korrigiert werden. Beispielsweise kann, indem das erste Balgventil 93.1 als einziges geöffnet und somit auf den Drucksensor 94 geschaltet wird, ein entsprechender Druck PMESS für den ersten Federbalg 92.1 gemessen werden, mit dem ein berechneter Einzeldruck PF1 korrigiert werden kann.

Wird in dem Schritt S0 festgestellt, dass kein Schaltvorgang des pneumatischen Systems 100 stattfindet, und somit ein ausreichender freier Zeitraum TFREI für eine Messung zur Verfügung steht, wird der Programmablauf derart über die Verzweigung V1 geleitet, dass Schritt S11 ausgeführt wird. In Schritt S11 wird geprüft, ob der momentane Betriebszustand des Fahrzeugs eine Druckluftmessung zulässt. Ist insbesondere zu erwarten, dass die Druckluftversorgung zur Niveauregelung des Fahrzeugs in einem ausreichend kurzen Zeitraum zur Verfügung stehen muss, wird von einer Druckluftmessung abgesehen und der Programmablauf über die Verzweigung V3 zum Ausgangspunkt und somit zu Schritt S0 zurückgeführt. Kommt jedoch gemäß den oben genannten Kriterien eine Druckluftmessung in Frage, wird in einem Schritt S12 eine Druckluftmessung, insbesondere durch den Druckluftsensor 94, durchgeführt. In einem anschließenden Schritt S13 erfolgt dann - analog zu Schritt S10 - ein Abgleich von gemessenem Wert PMESS und dem - insbesondere in einem vorangegangenen Zyklus - berechneten Wert P und insbesondere eine Korrektur des berechneten Wertes P durch den gemessenen Wert PMESS. Nach Schritt S13 wird der Programmablauf zum Ausgangspunkt und somit zu Schritt S0 zurückgeführt.

Im Betrieb, das heißt im Betrieb des pneumatischen Systems (100), insbesondere während des Betriebs eines ein pneumatisches System (100) aufweisenden Fahrzeugs (1000), kann eine solche Zustandsänderung (ZA) vergleichsweise häufig erfolgen, insbesondere schon bei geringen Beladungsänderungen, Temperaturschwankungen oder dynamischen, aus dem Betrieb resultierenden Kräften, die insbesondere einen Einfluss auf das Fahrzeughöhenniveau, das heißt die Auslenkung 92A, 92.1A, 92.2A, 92.3A, 92.4A, haben. Somit kann eine kontinuierliche, bzw. quasikontinuierliche rechnerische Bestimmung des Luftdrucks erfolgen, insbesondere weil die Zeit zur Durchführung der Berechnung des Druckes P auf Basis des pneumatischen Ersatzmodells PEM vergleichsweise gering ist, verglichen mit der messtechnischen Bestimmung des Druckes PMESS.

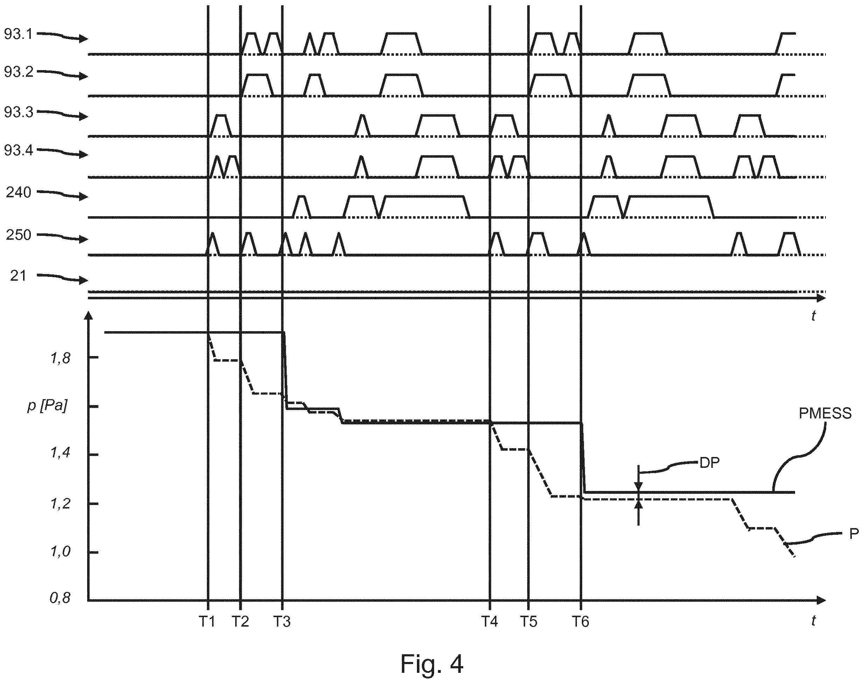

Fig. 4 zeigt einen zeitlichen Verlauf von Schaltzuständen eines pneumatischen Systems 100 und gemessenem Druck PMESS sowie berechnetem Druck P.

Der untere Teil der Abbildung zeigt einen zeitlichen Druckverlauf in Pascal im Druckspeicher 120, wobei zum einen der reale, gemessene Druckwert PMESS und der berechnete Druckwert P dargestellt ist.

In dem Beispiel wird zunächst zu einem Zeitpunkt T1 das Druckspeicher-Ventil 250 zusammen mit den Ventilen 93.3, 93.4 der Hinterachse 932 angesteuert. Da das Druckniveau im Druckspeicher 120 höher ist als in den Bälgen 91.3, 91.4 (die Balgdrücke sind hier nicht dargestellt) strömt Luft vom Druckspeicher 120 in die Bälge 91.3, 91.4. Folglich hebt sich das Fahrzeug an der Hinterachse 932 an und der Druck im Druckspeicher 120 sinkt.

Nach dem Heben der Hinterachse 932 findet zu einem Zeitpunkt T2 ein Heben der Vorderachse 930 statt. Hier wird wieder das Druckspeicher-Ventil 250 mit den Balgventilen 93.1, 93.2 angesteuert.

Da es vorliegend nicht möglich ist, den Druck im Druckspeicher 120 während des Hebens zu messen, ist eine anschließende zusätzliche Druckmessung zu einem Zeitpunkt T3 nötig.

Zu den Zeitpunkten T4, T5 und T6 werden die Schritte der Zeitpunkte T1, T2 und T3 analog wiederholt. Zum Zeitpunkt T4 erfolgt ein Anheben der Hinterachse 932 durch das Ansteuern der Ventile 93.3, 93.4. Zu Zeitpunkt T5 erfolgt ein Anheben der Vorderachse 930 durch das Ansteuern der Ventile 93.1, 93.2. Anschließend erfolgt eine Druckmessung zur Bestimmung des gemessenen Druckes PMESS zu einem Zeitpunkt T6.

Es ist zu beachten, dass der gemessene Druckwert PMESS erst jeweils während der Druckmessung (T3, T6) aktualisiert wird. Der berechnete Druckwert wird hingegen laufend aktualisiert (Verlauf der gestrichelten Linie bei T1 und T2 sowie T4 und T5).

Die geringe Druckdifferenz DP zwischen der Messung PMESS und der Berechnung P nach der realen Druckmessung zeigt, dass mit dem Berechnungsverfahren gemäß dem Konzept der Erfindung eine anschließende, korrigierende Messung sogar vollständig entfallen könnte.

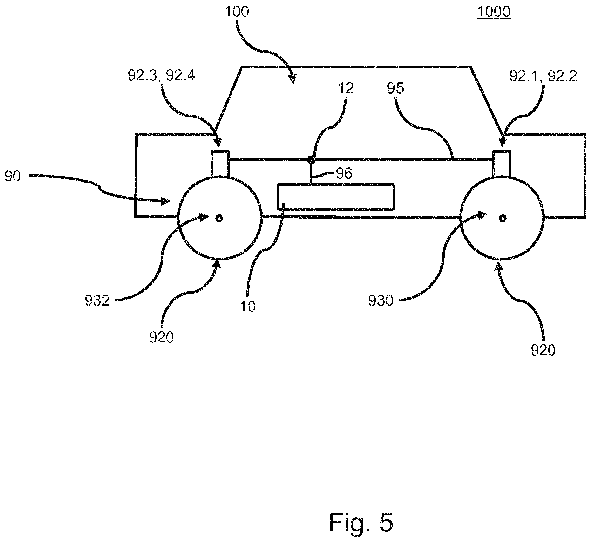

Fig. 5 zeigt eine schematische Darstellung eines Fahrzeugs 1000 --vorliegend in Form eines PKW-- aufweisend ein pneumatisches System 100 mit einer Druckluftversorgungsanlage 10 und einer Luftfederanlage 90. Insbesondere bei Fahrzeugen im PKW-Bereich ist eine schnelle Bereitstellung von Druckluft zur Niveauregelung im Betrieb von großer Bedeutung, da Pausen, insbesondere zur Durchführung einer Luftdruckmessung, vom Fahrer des Fahrzeugs wahrnehmbar sind. Das hier deswegen, ohne Einschränkung der Anwendbarkeit auch für LKWs oder andere Nutzfahrzeuge, beispielhaft dargestellte PKW-Fahrzeug 1000 verfügt über vier Räder 920, von denen hier aufgrund der Schnittdarstellung die zwei jeweils vorderen Räder gezeigt sind. Analog zur Anzahl der Räder verfügt die Luftfederanlage 90 über vier Luftfedern 92.1, 92.2, 92.3, 92.4, von denen hier analog zu den Rädern aufgrund der Schnittdarstellung die zwei jeweils vorderen Bälge gezeigt sind. Die vier Luftfedern 92.1, 92.2, 92.3, 92.4, die jeweils den vier Rädern 920 zugeordnet sind, werden als Teil der Luftfederanlage 90 von der Druckluftversorgungsanlage 10 mit Druckluft versorgt. Die Druckluftversorgungsanlage 10 ist über die Versorgungsleitung 96, den Galeriehauptanschluss 12 und die Galerie 95 mit den Komponenten der Pneumatikanlage 90, in diesem Falle den vier Luftfedern 92.1, 92.2, 92.3, 92.4 fluidführend verbunden.

Bezugszeichenliste (Teil der Beschreibung)

| | |
|---|---|
| 1 | Druckluftzuführung |
| 2 | Druckluftanschluss |
| 3 | Entlüftungsanschluss |
| 10 | Druckluftversorgungsanlage |
| 12 | Galeriehauptanschluss |
| 21 | Verdichteranordnung, Verdichter |
| 24 | Förderstromkennlinie |
| 60 | pneumatische Hauptleitung |
| 61 | Lufttrockner |
| 62 | Erste Drossel |
| 63 | Zweite Drossel |
| 68 | Luftfilter |
| 70 | Entlüftungsleitung |
| 82 | Druckspeicher-Zuleitung |
| 90 | Luftfederanlage, Pneumatikanlage |
| 91, 91.1, 91.2, 91.3, 91.4 | Federbalg, Balg |
| 91V, 91.1V, 91.2V, 91.3V, 91.4V | Balgvolumen |
| 92, 92.1, 92.2, 92.3, 92.4 | Luftfeder |
| 92A, 92.1A, 92.2A, 92.3A, 92.4A | Auslenkung der Luftfeder |
| 93, 93.1, 93.2, 93.3, 93.4 | Wegeventil, Balgventil |
| 94 | Drucksensor |
| 94L | Sensorleitung |
| 94C | Druckbestimmungseinheit |
| 95 | Galerie |
| 96 | Versorgungsleitung |
| 97 | Ventilblock |
| 100 | Pneumatisches System |
| 120 | Druckspeicher |
| 120V | Druckspeichervolumen |
| 240 | Entlüftungsventil |
| 241 | Steuerventil |
| 250 | Druckspeicher-Ventil |
| 300 | Einrichtung zum Steuern- und Regeln eines pneumatischen Systems |
| 302 | Regelleitung |
| 304 | Druckregler |
| 920 | Rad |
| 930 | Vorderachse |
| 932 | Hinterachse |
| 1000 | Fahrzeug |
| M | Motor |
| AE | Effektiver Entlüftungs-Strömungsquerschnitt |
| AF | Effektiver Federbalg-Strömungsquerschnitt |
| AS | Effektiver Speicher-Strömungsquerschnitt |
| AV | Effektiver Verdichter-Strömungsquerschnitt |
| AZ | Effektiver Zuführungs-Strömungsquerschnitt |
| BG | Blendengleichung |
| BIL, BIL' | Massenstrombilanz, weitere Massenstrombilanz |
| D1-D7 | Drosseln des pneumatischen Ersatzmodells |
| DL | Druckluft |
| DP | Druckdifferenz |
| GG | Gasgleichung |
| GGI | Ideale Gasgleichung |
| H.1 - H.4 | Höhenstandssensor |
| MB, MB1-MB4 | Balg-Massenstrom |

| | |
|---|---|
| ME | Entlüftungs-Luftmassenstrom |
| MG | Gesamt-Luftmasse |
| ML1-4 | Erste bis vierte Balg- Einzelluftmasse |
| MLS | Druckspeicher-Einzelluftmasse |
| MLL | Lufttrockner-Einzelluftmasse |
| MS | Speicher-Luftmassenstrom |
| MV | Verdichter-Luftmassenstrom |
| MZ | Zuführungs-Luftmassenstrom |
| P | Druck, berechneter Druck |
| PE | Entlüftungs-Druck |
| PF, PF1, PF2, PF3, PF4 | Federbalg-Druck |
| PEM | Pneumatisches Ersatzmodell |
| PL | Lufttrockner-Druck |
| PMESS | Gemessener Druck |
| PS | Speicher-Druck |
| PV | Verdichter-Druck |
| PU | Umgebungsdruck |
| PZ | Zuführungs-Druck |
| RV | Regelvorgang |
| U | Umgebung |
| UK | Kompressorversorgungsspannung |
| UP | Umgebungsparameter |
| SV | Schaltvorgang |
| T | Temperatur |
| T1 — T6 | Zeitpunkte von Schaltvorgängen |
| TFREI | Freier Zeitraum zur Druckmessung |
| VD | Druckspeicher-Volumen |
| VL | Lufttrockner-Volumen |
| VV | Ventilblock-Volumen |
| Z | Anwendungszyklus des pneumatischen Ersatzmodells |

**Patentansprüche**

1. Verfahren zum Betreiben eines pneumatischen Systems (100) mit einer Druckluftversorgungsanlage (10) und einer Luftfederanlage (90), wobei das pneumatische System (100) aufweist:

   - einen Druckspeicher (120) mit einem Druckspeicher-Volumen (VD), insbesondere einen Lufttrockner (61) mit einem Lufttrockner-Volumen (VL),
   - eine Galerie (95) und mindestens eine über ein Ventil (93, 93.1, 93.2, 93.3, 93.4) eines Ventilblocks (97) selektiv gasführend mit der Galerie (95) verbindbare Luftfeder (92, 92.1, 92.2, 92.3, 92.4), mit einer Anzahl von Balgvolumina (91V, 91.1V, 91.2V, 91.3V, 91.4V), welche den Luftfedern (92, 92.1, 92.2, 92.3, 92.4) zugeordnet sind, und das Verfahren folgende Schritte aufweist:
   - Bestimmen von mindestens einer Auslenkung (92A, 92.1A, 92.2A, 92.3A, 92.4A) der mindestens einen Luftfeder (92, 92.1, 92.2, 92.3, 92.4),
   - Bestimmen von dem mindestens einen Balgvolumen (91V, 91.1V, 91.2V, 91.3V, 91.4V) eines Federbalgs (91, 91.1, 91.2, 91.3, 91.4) der mindestens einen Luftfeder (92, 92.1, 92.2, 92.3, 92.4) auf Basis der mindestens einen Auslenkung (92A, 92.1A, 92.2A, 92.3A, 92.4A),

   **gekennzeichnet durch**

   - Angabe eines pneumatischen Ersatzmodells (PEM) für die Volumina (91V, 91.1V, 91.2V, 91.3V, 91.4V, VD, VL), auf Basis einer Massenstrombilanz (BIL) um ein Bilanzvolumen (VBIL),
   - Berechnen von mindestens einem Druckwert (P, PL, PV, PS, PE, PF1, PF2, PF3, PF4) eines Volumens (VBIL, 91V, 91.1V, 91.2V, 91.3V, 91.4V, VD, VL) auf Basis des pneumatischen Ersatzmodells (PEM).

2. Verfahren nach Anspruch 1, **dadurch gekennzeichnet, dass** der mindestens eine Druckwert (P, PL, PV, PS, PE, PF1, PF2, PF3, PF4) bei einer Zustandsänderung (ZA) des pneumatischen Systems (100) berechnet wird,

- wobei die Zustandsänderung (ZA) eine Änderung der mindestens einen Auslenkung (92A, 92.1A, 92.2A, 92.3A, 92.4A) oder ein Regelvorgang (RV) der Luftfederanlage (90) oder ein Schaltvorgang (SV) mindestens eines Ventils (93, 93.1, 93.2, 93.3, 93.4, 240, 250) ist.

3. Verfahren nach Anspruch 1 oder 2, **dadurch gekennzeichnet, dass**

- der mindestens eine Druckwert (P, PL, PV, PS, PE, PF1, PF2, PF3, PF4) mittels eines durch einen Drucksensor (94) gemessenen Druckwerts (PMESS) korrigiert wird.

4. Verfahren nach Anspruch 3, **dadurch gekennzeichnet, dass** der gemessene Druckwert (PMESS) mittels des Drucksensors (94) gemessen wird in einem Zeitraum (TFREI), in dem kein Regelvorgang (RV) der Luftfederanlage (90) stattfindet.

5. Verfahren nach Anspruch 3, **dadurch gekennzeichnet, dass** der gemessene Druckwert (PMESS) mittels des Drucksensors (94) gemessen wird während eines Regelvorgangs (RV).

6. Verfahren nach einem der vorhergehenden Ansprüche, **dadurch gekennzeichnet, dass** die mindestens eine Auslenkung (92A, 92.1A, 92.2A, 92.3A, 92.4A) mittels eines Höhenstandssensors (H.1, H.2, H.3, H.4) gemessen wird.

7. Verfahren nach einem der vorhergehenden Ansprüche, **dadurch gekennzeichnet, dass** das pneumatische Ersatzmodell (PEM) gebildet wird durch die Schritte:

- Bestimmen eines im Bilanzvolumen (VBIL) herrschenden Initialdruckes (PI),
- Bestimmen mindestens eines Einzel-Initialdrucks (PL, PV, PS, PE, PF1, PF2, PF3, PF4) in mindestens einem Einzelvolumen (VL, VV, VD, U, 91.1V, 91.2V, 91.3V, 91.4V), insbesondere in einem Einzelvolumen (VL, VV, VD, U, 91.1V, 91.2V, 91.3V, 91.4V), das nicht Teil des Bilanzvolumens (VBIL) ist,
- Bestimmen sämtlicher in das Bilanzvolumen (VBIL) hineinströmender oder aus dem Bilanzvolumen (VBIL) hinausströmender Luftmassenströme (MB, MB1, MB2, MB3, MB4, MS, MZ),
- Bestimmen einer sich im Bilanzvolumen (VBIL) befindenden Gesamt-Luftmasse (MG), und/oder Bestimmen mindestens einer sich in einem Volumen (91V, 91.1V, 91.2V, 91.3V, 91.4V, VD, VL) befindenden Einzelluftmasse (ML1, ML2, ML3, ML4, MLS, MLL),
- Berechnen des Druckes (P, PL, PV, PS, PE, PF1, PF2, PF3, PF4) mit einer Luftmasse (MG, ML1, ML2, ML3, ML4, MLS, MLL), einem Volumen (VBIL, 91V, 91.1V, 91.2V, 91.3V, 91.4V, VD, VL) und einer gemessenen Temperatur (T) auf Basis einer Gasgleichung (GG), insbesondere einer idealen Gasgleichung (GGI).

8. Verfahren nach Anspruch 7, **dadurch gekennzeichnet, dass** das Bestimmen sämtlicher in das Bilanzvolumen (VBIL) hineinströmender oder aus dem Bilanzvolumen (VBIL) hinausströmender Luftmassenströme (MB, MB1, MB2, MB3, MB4, MS, MZ) weiter folgende Schritte aufweist:

- Bestimmen durch Berechnen mindestens eines Balg-Luftmassenstroms (MB, MB1, MB2, MB3, MB4) mittels einer Blendengleichung (BG) unter Berücksichtigung mindestens eines Federbalg-Druckes (PF1, PF2, PF3, PF4) und mindestens eines effektiven Federbalg-Strömungsquerschnitts (AF1, AF2, AF3, AF4), und/oder
- Bestimmen durch Berechnen mindestens eines Speicher-Luftmassenstroms (MS) mittels einer Blendengleichung (BG) unter Berücksichtigung mindestens eines Speicher-Druckes (PS) und mindestens eines effektiven Speicher-Strömungsquerschnitts (AS), und/oder
- Bestimmen durch Berechnen eines Zuführungs-Luftmassenstroms (MZ), mittels einer Blendengleichung (BG) unter Berücksichtigung mindestens eines Lufttrockner-Druckes (PL) und mindestens eines effektiven Zuführungs-Strömungsquerschnitts (AZ),
- Bilanzieren einer Gesamt-Luftmasse (MG) unter Berücksichtigung sämtlicher Luftmassenströme (MB, MB1, MB2, MB3, MB4, MS, MZ).

9. Verfahren nach Anspruch 7 oder 8, **dadurch gekennzeichnet, dass** das Bestimmen des Lufttrockner-Druckes (PL) weiterhin die Schritte aufweist:

- Bestimmen durch Berechnen eines Verdichter-Luftmassenstroms (MV) mittels einer Blendengleichung (BG) unter Berücksichtigung mindestens eines Verdichter-Druckes (PV) und mindestens eines effektiven Verdichter-Strömungsquerschnitts (AV), und/oder
- Bestimmen durch Berechnen eines Entlüftungs-Luftmassenstroms (ME) mittels einer Blendengleichung (BG)

unter Berücksichtigung mindestens eines Entlüftungs-Druckes (PE) und mindestens eines effektiven Entlüftungs-Strömungsquerschnitts (AE).

**10.** Verfahren nach einem der Ansprüche 7 bis 9, **dadurch gekennzeichnet, dass** das Bestimmen des im Bilanzvolumen (VBIL) herrschenden Initialdruckes (PI) auf Basis des gemessenen Druckes (PMESS) erfolgt.

**11.** Verfahren nach einem der Ansprüche 7 bis 9, **dadurch gekennzeichnet, dass** das Bestimmen des im Bilanzvolumen (VBIL) herrschenden Initialdruckes (PI) auf Basis des berechneten Druckes (P) eines vorangegangenen Anwendungszyklus (Z) des pneumatischen Ersatzmodells (PEM) erfolgt.

**12.** Verfahren nach einem der Ansprüche 7 bis 11, **dadurch gekennzeichnet, dass** der Verdichter-Druck (PV) und/oder der Verdichter-Luftmassenstrom (MV) durch eine Förderstromkennlinie (24) ermittelt wird.

**13.** Verfahren nach Anspruch 12, **dadurch gekennzeichnet, dass** die Förderstromkennlinie (24) in Abhängigkeit von Umgebungsparametern (UP), insbesondere einen atmosphärischen Umgebungsdruck (PU) und/oder einer Kompressorversorgungsspannung (UK), angepasst wird.

**14.** Verfahren nach einem der Ansprüche 9 bis 13, **dadurch gekennzeichnet, dass** der Entlüftungs-Druck (PE) durch den atmosphärischen Umgebungsdruck (PU) gegeben ist.

**15.** Verfahren nach einem der vorhergehenden Ansprüche, **dadurch gekennzeichnet, dass** Druckluft (DL) durch einen Verdichter (21) erzeugt wird, falls der bestimmte Druck (P) oder der gemessene Druck (PMESS) unterhalb eines Minimal-Druckwertes (PMIN) liegt.

**16.** Verfahren nach einem der vorhergehenden Ansprüche, **dadurch gekennzeichnet, dass** Druckluft (DL) über einen Entlüftungsanschluss (3) abgelassen wird, falls der bestimmte Druck (P) oder der gemessene Druck (PMESS) oberhalb eines Maximal-Druckwertes (PMAX) liegt.

**17.** Pneumatisches System (100) mit einer Druckluftversorgungsanlage (10) und einer Luftfederanlage (90) sowie mit einer Einrichtung (300) zum Steuern- und Regeln des pneumatischen Systems (100), wobei das pneumatische System (100) weiter aufweist:

- einen Druckspeicher (120),
- eine Galerie (95) und mindestens eine über ein Ventil (93, 93.1, 93.2, 93.3, 93.4) eines Ventilblocks (97) selektiv gasführend mit der Galerie (95) verbindbare Luftfeder (92, 92.1, 92.2, 92.3, 92.4), mit einer Anzahl von Balgvolumina, welche den Luftfedern (91V, 91.1V, 91.2V, 91.3V, 91.4V), welche den Luftfedern (92, 92.1, 92.2, 92.3, 92.4) zugeordnet sind,
- ein Sensor zum Bestimmen von mindestens einer Auslenkung der mindestens einen Luftfeder,

**dadurch gekennzeichnet, dass** die Einrichtung zum Steuern- und Regeln des pneumatischen Systems ausgebildet ist zur Durchführung des Verfahrens nach einem der Ansprüche 1 bis 16 und mit einer Druckbestimmungseinheit (94C) und einem Druckregler (304).

**18.** Fahrzeug (1000), insbesondere Personenkraftwagen (PKW), mit dem pneumatischen System nach Anspruch 17.

**Claims**

**1.** A method for operating a pneumatic system (100) with a compressed air supply unit (10) and an air spring unit (90), wherein the pneumatic system (100) has:

- a pressure accumulator (120) with a pressure accumulator volume (VD), in particular an air dryer (61) with an air dryer volume (VL),
- a gallery (95) and at least one air spring (92, 92.1, 92.2, 92.3, 92.4) selectively gas-conducting connectable to the gallery (95) via a valve (93, 93.1, 93.2, 93.3, 93.4) of a valve block (97), with a number of bellows volumes (91V, 91.1V, 91.2V, 91.3V, 91.4V), which are assigned to the air springs (92, 92.1, 92.2, 92.3, 92.4), and the method has the following steps:

- determining at least one deflection (92A, 92.1A, 92.2A, 92.3A, 92.4A) of the at least one air spring (92, 92.1, 92.2, 92.3, 92.4),
- determining of the at least one bellows volume (91V, 91.1V, 91.2V, 91.3V, 91.4V) of a spring bellows (91, 91.1, 91.2, 91.3, 91.4) of the at least one air spring (92, 92.1, 92.2, 92.3, 92.4) on the basis of the at least one deflection (92A, 92.1A, 92.2A, 92.3A, 92.4A), **characterized by**
- specification of a pneumatic replacement model (PEM) for the volumes (91V, 91.1V, 91.2V, 91.3V, 91.4V,VD,VL), on the basis of a mass flow balance (BIL) by a balance volume (VBIL),
- calculation of at least one pressure value (P, PL, PV, PS, PE, PF1, PF2, PF3, PF4) of a volume (VBIL, 91V, 91.1V, 91.2V, 91.3V, 91.4V, VD, VL) on the basis of the pneumatic replacement model (PEM).

2. The method according to claim 1, **characterized in that** the at least one pressure value (P, PL, PV, PS, PE, PF1, PF2, PF3, PF4) is calculated in the event of a change in state (ZA) of the pneumatic system (100),

- wherein the change in state (ZA) is a change of the at least one deflection (92A, 92.1A, 92.2A, 92.3A, 92.4A) or a control operation (RV) of the air spring unit (90) or a switching operation (SV) of at least one valve (93, 93.1, 93.2, 93.3, 93.4, 240, 250).

3. The method according to claim 1 or 2, **characterized in that**

- the at least one pressure value (P, PL, PV, PS, PE, PF1, PF2, PF3, PF4) is corrected by means of pressure value (PMESS) measured by a pressure sensor (94).

4. The method according to claim 3, **characterized in that** the measured pressure value (PMESS) is measured by means of the pressure sensor (94) in a time period (TFREI) in which no control operation (RV) of the air spring unit (90) takes place.

5. The method according to claim 3, **characterized in that** the measured pressure value (PMESS) is measured by means of the pressure sensor (94) during a control operation (RV).

6. The method according to any of the foregoing claims, **characterized in that** the at least one deflection (92A, 92.1A, 92.2A, 92.3A, 92.4A) is measured by means of a height sensor (H.1, H.2, H.3, H.4).

7. The method according to any of the foregoing claims, **characterized in that** the pneumatic analogous model (PEM) is formed by the following steps:

- determining an initial pressure (PI) prevailing in the balance volume (VBIL),
- determining at least one individual initial pressure (PL, PV, PS, PE, PF1, PF2, PF3, PF4) in at least one individual volume (VL, VV, VD, U, 91.1V, 91.2V, 91.3V, 91.4V), in particular in an individual (VL, VV, VD, U, 91.1V, 91.2V, 91.3V, 91.4V), that is not part of the balance volume (VBIL),
- determining all air mass flows (MB, MB1, MB2, MB3, MB4, MS, MZ) flowing into the balance volume (VBIL) or flowing out of the balance volume (VBIL),
- determining an overall air mass (MG) in the balance volume (VBIL), and/or determining at least one individual air mass (ML1, ML2, ML3, ML4, MLS, MLL) in a volume (91V, 91.1V, 91.2V, 91.3V, 91.4V, VD, VL),
- calculating the pressure (P, PL, PV, PS, PE, PF1, PF2, PF3, PF4) with an air mass (MG, ML1, ML2, ML3, ML4, MLS, MLL), a volume (VBIL, 91V, 91.1V, 91.2V, 91.3V, 91.4V, VD, VL) and a measured temperature (T) on the basis of a gas equation (GG), in particular of an ideal gas equation (GGI).

8. The method according to claim 7, **characterized in that** the determining of all air mass flows (MB, MB1, MB2, MB3, MB4, MS, MZ) flowing into the balance volume (VBIL) or flowing out of the balance volume (VBIL) comprises the following further steps:

- determining by calculating at least one bellows air mass flow (MB, MB1, MB2, MB3, MB4) by means of a diaphragm equation (BG) considering at least one spring bellows pressure (PF1, PF2, PF3, PF4) and at least one actual spring bellows flow cross-section (AF1, AF2, AF3, AF4), and/or
- determining by calculating at least one accumulator air mass flow (MS) by means of a diaphragm equation (BG) considering at least one accumulator pressure (PS) and at least one actual accumulator flow cross-section (AS), and/or
- determining by calculating a supply air mass flow (MZ) by means of a diaphragm equation (BG) considering at least one air dryer pressure (PL) and at least one actual supply flow cross-section (AZ),
- balancing an overall air mass (MG) considering all air mass flows (MB, MB1, MB2, MB3, MB4, MS, MZ).

**9.** The method according to claim 7 or 8, **characterized in that** the determining of the air dryer pressure (PL) further comprises the steps:

- determining by calculating a compressor air mass flow (MV) by means of a diaphragm equation (BG) considering at least one compressor pressure (PV) and at least one actual compressor flow cross-section (AV), and or
- determining by calculating a ventilation air mass flow (ME) by means of a diaphragm equation (BG) considering at least one ventilation pressure (PE) and at least one actual ventilation flow cross section (AE).

**10.** The method according to any of claims 7 to 9, **characterized in that** the determining of the initial pressure (PI) prevailing in the balance volume (VBIL) on the basis of the measured pressure (PMESS).

**11.** The method according to any of claims 7 to 9, **characterized in that** the determining of the initial pressure (PI) prevailing in the balance volume (VBIL) occurs on the basis of the calculated pressure (P) of a previous application cycle (Z) of the pneumatic analogous model (PEM).

**12.** The method according to any of claims 7 to 11, **characterized in that** the compressor pressure (PV) and/or the compressor air mass flow (MV) is determined by a flow characteristic curve (24).

**13.** The method according to claim 12, **characterized in that** the flow characteristic curve (24) is adjusted depending on ambient parameters (UP), in particular an atmospheric ambient pressure (PU) and/or a compressor supply voltage (UK).

**14.** The method according to any of claims 9 to 13, **characterized in that** the ventilation pressure (PE) is given by the atmospheric ambient pressure (PU).

**15.** The method according to any of the foregoing claims, **characterized in that** compressed air (DL) is produced/generated by a compressor (21) if the determined pressure (P) or the measured pressure (PMESS) lies below a minimal pressure value (PMIN).

**16.** The method according to any of the foregoing claims, **characterized in that** compressed air (DL) is released via a ventilation connection (3) if the determined pressure (P) or the measured pressure (PMESS) lies above a maximum pressure value (PMAX).

**17.** A pneumatic system (100) with a compressed air supply unit (10) and an air spring unit (90) as well as with a device (300) for controlling and regulating the pneumatic system (100), wherein the pneumatic system (100) further comprises:

- a pressure accumulator (120),
- a gallery (95) and at least one and at least one air spring (92, 92.1, 92.2, 92.3, 92.4) selectively gas-conducting connectable to the gallery (95) via a valve (93, 93.1, 93.2, 93.3, 93.4) of a valve block (97), with a number of bellows volumes (91V, 91.1V, 91.2V, 91.3V, 91.4V), which are assigned to the air springs (92, 92.1, 92.2, 92.3, 92.4),
- a sensor for determining at least one deflection of the at least one air spring, **characterized in that** the device for controlling and regulating the pneumatic system is embodied to carry out the method according to any of claims 1 to 16 and with a pressure determination unit (94C) and a pressure regulator (304) .

**18.** A vehicle (1000), in particular a personal vehicle (PKW), with the pneumatic system according to claim 17.

**Revendications**

**1.** Procédé pour faire fonctionner un système pneumatique (100) avec une installation d'alimentation en air comprimé (10) et une installation de ressort pneumatique (90), dans lequel le système pneumatique (100) présente :

- un accumulateur de pression (120) avec un volume d'accumulateur de pression (VD), en particulier un sécheur d'air (61) avec un volume de sécheur d'air (VL),
- une galerie (95) et au moins un ressort pneumatique (92, 92.1, 92.2, 92.3, 92.4) pouvant être relié sélectivement de manière à guider le gaz à la galerie (95) par l'intermédiaire d'une soupape (93, 93.1, 93.2, 93.3, 93.4) d'un bloc de soupape (97), avec une pluralité de volumes (91V, 91.1V, 91.2V, 91.3V, 91.4V) de soufflet, lesquels sont associés aux ressorts pneumatiques (92, 92.1, 92.2, 92.3, 92.4), et le procédé présente les étapes suivantes :
- la détermination d'au moins une déviation (92A, 92.1A, 92.2A, 92.3A, 92.4A) de l'au moins un ressort pneumatique (92, 92.1, 92.2, 92.3, 92.4),
- la détermination de l'au moins un volume (91V, 91.1V, 91.2V, 91.3V, 91.4V) de soufflet d'un soufflet à ressort (91, 91.1, 91.2, 91.3, 91.4) de l'au moins un ressort pneumatique (92, 92.1, 92.2, 92.3, 92.4) sur la base de l'au moins une déviation (92A, 92.1A, 92.2A, 92.3A, 92.4A),

**caractérisé par**

- l'indication d'un modèle de remplacement pneumatique (PEM) pour les volumes (91V, 91.1V, 91.2V, 91.3V, 91.4V, VD, VL), sur la base d'un bilan de débit massique (BIL) autour d'un volume de bilan (VBIL),
- le calcul d'au moins une valeur de pression (P, PL, PV, PS, PE, PF1, PF2, PF3, PF4) d'un volume (VBIL, 91V, 91.1V, 91.2V, 91.3V, 91.4V, VD, VL) sur la base du modèle de remplacement pneumatique (PEM).

2. Procédé selon la revendication 1, **caractérisé en ce que** l'au moins une valeur de pression (P, PL, PV, PS, PE, PF1, PF2, PF3, PF4) lors d'une modification d'état (ZA) du système pneumatique (100) est calculée,

- dans lequel la modification d'état (ZA) est une modification de l'au moins une déviation (92A, 92.1A, 92.2A, 92.3A, 92.4A) ou un processus de régulation (RV) de l'installation de ressort pneumatique (90) ou un processus de commutation (SV) d'au moins une soupape (93, 93.1, 93.2, 93.3, 93.4,, 240, 250).

3. Procédé selon la revendication 1 ou 2, **caractérisé en ce que**

- l'au moins une valeur de pression (P, PL, PV, PS, PE, PF1, PF2, PF3, PF4) est corrigée au moyen d'une valeur de pression (PMESS) mesurée par un capteur de pression (94).

4. Procédé selon la revendication 3, **caractérisé en ce que** la valeur de pression (PMESS) mesurée est mesurée au moyen du capteur de pression (94) dans un laps de temps (TFREI) dans lequel aucun processus de régulation (RV) de l'installation de ressort pneumatique (90) n'a lieu.

5. Procédé selon la revendication 3, **caractérisé en ce que** la valeur de pression (PMESS) mesurée est mesurée au moyen du capteur de pression (94) pendant un processus de régulation (RV) .

6. Procédé selon l'une quelconque des revendications précédentes, **caractérisé en ce que** l'au moins une déviation (92A, 92.1A, 92.2A, 92.3A, 92.4A) est mesurée au moyen d'un capteur de hauteur de châssis (H.1, H.2, H.3, H.4).

7. Procédé selon l'une quelconque des revendications précédentes, **caractérisé en ce que** le modèle de remplacement pneumatique (PEM) est formé par les étapes :

- de détermination d'une pression initiale (PI) régnant dans le volume de bilan (VBIL),
- de détermination d'au moins une pression (PL, PV, PS, PE, PF1, PF2, PF3, PF4) initiale individuelle dans au moins un volume individuel (VL, VV, VD, U, 91.1V, 91.2V, 91.3V, 91.4V), en particulier dans un volume individuel (VL, VV, VD, U, 91.1V, 91.2V, 91.3V, 91.4V) qui ne fait pas partie du volume de bilan (VBIL),
- de détermination de tous les débits massiques d'air (MB, MB1, MB2, MB3, MB4, MS, MZ) s'écoulant à l'intérieur du volume de bilan (VBIL) ou s'écoulant à l'extérieur du volume de bilan (VBIL),
- de détermination d'une masse d'air totale (MG) se trouvant dans le volume de bilan (VBIL), et/ou de détermination d'au moins une masse d'air individuelle (ML1, ML2, ML3, ML4, MLS, MLL) se trouvant dans un volume (91V, 91.1V, 91.2V, 91.3V, 91.4V, VD, VL),
- de calcul de la pression (P, PL, PV, PS, PE, PF1, PF2, PF3, PF4) avec une masse d'air (MG, ML1, ML2, ML3, ML4, MLS, MLL), un volume (VBIL, 91V, 91.1V, 91.2V, 91.3V, 91.4V, VD, VL) et d'une température mesurée (T) sur la base d'une équation des gaz (GG), en particulier d'une équation des gaz parfaits (GGI).

8. Procédé selon la revendication 7, **caractérisé en ce que** la détermination de tous les débits massiques d'air (MB, MB1, MB2, MB3, MB4, MS, MZ) s'écoulant à l'intérieur du volume de bilan (VBIL) ou s'écoulant à l'extérieur du volume de bilan (VBIL) présente en outre les étapes suivantes :

- la détermination par calcul d'au moins un débit massique d'air (MB, MB1, MB2, MB3, MB4) de soufflet au moyen d'une équation de diaphragme (BG) avec prise en compte d'au moins une pression (PF1, PF2, PF3, PF4) de soufflet à ressort et d'au moins une section transversale d'écoulement de soufflet à ressort effective (AF1, AF2, AF3, AF4), et/ou
- de détermination par calcul d'au moins un débit massique d'air d'accumulateur (MS) au moyen d'une équation de diaphragme (BG) avec prise en compte d'au moins une pression d'accumulateur (PS) et d'au moins une section transversale d'écoulement d'accumulateur effective (AS), et/ou
- de détermination par calcul d'un débit massique d'air d'amenée (MZ), au moyen d'une équation de diaphragme (BG) avec prise en compte d'au moins une pression de sécheur d'air (PL) et d'au moins une section transversale d'écoulement d'amenée effective (AZ), et/ou
- d'établissement du bilan d'une masse d'air totale (MG) avec prise en compte de tous les débits massiques d'air (MB, MB1, MB2, MB3, MB4, MS, MZ).

9.  Procédé selon la revendication 7 ou 8, **caractérisé en ce que** la détermination de la pression de sécheur d'air (PL) présente en outre les étapes :

    - de détermination par calcul d'un débit massique d'air de compresseur (MV) au moyen d'une équation de diaphragme (BG) avec prise en compte d'au moins une pression de compresseur (PV) et d'au moins une section transversale d'écoulement de compresseur effective (AV), et/ou
    - de détermination par calcul d'un débit massique d'air d'aération (ME) au moyen d'une équation de diaphragme (BG) avec prise en compte d'au moins une pression d'aération (PE) et d'au moins une section transversale d'écoulement d'aération effective (AE) .

10. Procédé selon l'une quelconque des revendications 7 à 9, **caractérisé en ce que** la détermination de la pression initiale (PI) régnant dans le volume de bilan (VBIL) s'effectue sur la base de la pression (PMESS) mesurée.

11. Procédé selon l'une quelconque des revendications 7 à 9, **caractérisé en ce que** la détermination de la pression initiale (PI) régnant dans le volume de bilan (VBIL) s'effectue sur la base de la pression (P) calculée d'un cycle d'application (Z) précédent du modèle de remplacement pneumatique (PEM).

12. Procédé selon l'une quelconque des revendications 7 à 11, **caractérisé en ce que** la pression de compresseur (PV) et/ou le débit massique de compresseur (MV) est déterminé(e) par une courbe caractéristique de flux de transport (24).

13. Procédé selon la revendication 12, **caractérisé en ce que** la courbe caractéristique de flux de transport (24) est adaptée en fonction de paramètres d'environnement (UP), en particulier d'une pression ambiante atmosphérique (PU) et/ou d'une tension d'alimentation de compresseur (UK).

14. Procédé selon l'une quelconque des revendications 9 à 13, **caractérisé en ce que** la pression d'aération (PE) est donnée par la pression ambiante atmosphérique (PU).

15. Procédé selon l'une quelconque des revendications précédentes, **caractérisé en ce que** l'air comprimé (DL) est produit par un compresseur (21), au cas où la pression (P) déterminée ou la pression (PMESS) mesurée se situerait au-dessous d'une valeur de pression minimale (PMIN).

16. Procédé selon l'une quelconque des revendications précédentes, **caractérisé en ce que** l'air comprimé (DL) est laissé échapper par l'intermédiaire d'un raccord d'aération (3), au cas où la pression (P) déterminée ou la pression (PMESS) mesurée se situerait au-dessus d'une valeur de pression maximale (PMAX).

17. Système pneumatique (100) avec une installation d'alimentation en air comprimé (10) et une installation de ressort pneumatique (90) ainsi qu'avec un dispositif (300) pour la commande et la régulation du système pneumatique (100), dans lequel le système pneumatique (100) présente en outre :

    - un accumulateur de pression (120),
    - une galerie (95) et au moins un ressort pneumatique (92, 92.1, 92.2, 92.3, 92.4) pouvant être relié sélectivement de manière à guider le gaz à la galerie (95) par l'intermédiaire d'une soupape (93, 93.1, 93.2, 93.3, 93.4) d'un bloc de soupape (97), avec une pluralité de volumes de soufflet, lesquels sont associés aux ressorts pneumatiques (92, 92.1, 92.2, 92.3, 92.4),
- un capteur pour la détermination d'au moins une déviation de l'au moins un ressort pneumatique,

**caractérisé en ce que** le dispositif pour la commande et la régulation du système pneumatique est réalisé pour mettre en œuvre le procédé selon l'une quelconque des revendications 1 à 16 et avec une unité de détermination de pression (94C) et un régulateur de pression (304).

18. Véhicule (1000), en particulier voiture particulière (PKW), avec le système pneumatique selon la revendication 17.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1744915 B1
- EP 2301775 A1
- EP 1844961 A1
- WO 2009054797 A1
- JP 3039209 B
- DE 102005045269 A1